(19) Europäisches Patentamt
European Patent Office
Office européen des brevets

(11) **EP 4 657 389 A1**

(12) **EUROPEAN PATENT APPLICATION**
published in accordance with Art. 153(4) EPC

(43) Date of publication:
**03.12.2025   Bulletin 2025/49**

(21) Application number: **24759691.9**

(22) Date of filing: **21.02.2024**

(51) International Patent Classification (IPC):
*G06V 10/80* (2022.01)          *G06N 3/0464* (2023.01)
*G06V 10/50* (2022.01)          *G06V 10/82* (2022.01)
*G06V 10/776* (2022.01)          *G06N 3/048* (2023.01)
*G06N 3/084* (2023.01)

(86) International application number:
**PCT/CN2024/077856**

(87) International publication number:
**WO 2024/175014 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **21.02.2023   CN 202310185947**

(71) Applicant: **Huawei Technologies Co., Ltd.
Shenzhen, Guangdong 518129 (CN)**

(72) Inventors:
• **DUAN, Baishan
Shenzhen, Guangdong 518129 (CN)**
• **ZHU, Mingjian
Shenzhen, Guangdong 518129 (CN)**
• **HU, Hailin
Shenzhen, Guangdong 518129 (CN)**
• **WANG, Yunhe
Shenzhen, Guangdong 518129 (CN)**

(74) Representative: **Pfenning, Meinig & Partner mbB
Patent- und Rechtsanwälte
Theresienhöhe 11a
80339 München (DE)**

(54)   **IMAGE PROCESSING METHOD AND RELATED DEVICE THEREOF**

(57)   This application discloses an image processing method and a related device thereof, to effectively reduce a computational workload of image processing, thereby shortening total duration of image processing, and improving image processing efficiency. The method in this application includes: after receiving N patches of a target image, a target model may first evaluate the N patches, to obtain evaluation values of the N patches. Next, the target model may select M patches from the N patches by using the evaluation values of the N patches as a selection criterion. Then, the target model may fuse the M patches, to obtain a fusion result of the M patches. Finally, the target model may perform a series of processing on the fusion result of the M patches, to obtain a processing result of the target image.

| Obtain N patches of a target image | 501 |

| Evaluate the N patches, to obtain evaluation values of the N patches, where the evaluation values of the N patches indicate importance degrees of content presented by the N patches | 502 |

| Determine M patches from the N patches based on the evaluation values of the N patches, where N>M≥2 | 503 |

| Fuse the M patches, to obtain a fusion result of the M patches | 504 |

| Obtain a processing result of the target image based on the fusion result of the M patches | 505 |

FIG. 5

## Description

This application claims priority to Chinese Patent Application No. 202310185947.3, filed with the China National Intellectual Property Administration on February 21, 2023 and entitled "IMAGE PROCESSING METHOD AND RELATED DEVICE THEREOF", which is incorporated herein by reference in its entirety.

## TECHNICAL FIELD

Embodiments of this application relate to the field of artificial intelligence (artificial intelligence, AI) technologies, and in particular, to an image processing method and a related device thereof.

## BACKGROUND

With rapid development of computer technologies, a neural network model in an AI technology is used in more fields to complete various visual tasks. To explore a neural network model with a simpler structure, a visual multilayer perceptron (multilayer perception, MLP) model emerges accordingly. As a new type of visual backbone neural network, a visual multilayer perceptron has achieved good effect in many visual tasks.

Currently, when an image in a visual task needs to be processed, the image may be first divided into a plurality of patches (token), and the plurality of patches are input into the visual multilayer perceptron model. In this case, the visual multilayer perceptron model may fuse all the patches, to obtain a fusion result of the plurality of patches. Subsequently, the visual multilayer perceptron model may perform a series of processing on the fusion result of the plurality of patches, to obtain a processing result of the image. The processing result of the image may be used to complete the visual task.

In the foregoing process, because the visual multilayer perceptron model needs to fuse all the patches, a very large computational workload is required, leading not only to excessive total duration of image processing, but also resulting in inefficient image processing.

## SUMMARY

Embodiments of this application provide an image processing method and a related device thereof, to effectively reduce a computational workload of image processing, thereby shortening total duration of image processing, and improving image processing efficiency.

A first aspect of embodiments of this application provides an image processing method. The method may be implemented by using a target model, and the method includes:

When a target image in a visual task needs to be processed, the target image may be first divided into N patches. Herein, N is a positive integer greater than 2.

After receiving the N patches of the target image, the target model may first separately evaluate the N patches, to correspondingly obtain evaluation values of the N patches. It should be noted that the evaluation values of the N patches indicate importance degrees of content presented by the N patches. For any one of the N patches, a larger evaluation value of the patch indicates more important content presented by the patch, and a smaller evaluation value of the patch indicates less important content presented by the patch.

After obtaining the evaluation values of the N patches, the target model may select M patches from the N patches based on a value relationship between the evaluation values of the N patches. Herein, M is a positive integer less than N and greater than or equal to 2. In this case, the M patches selected by the target model from the N patches forming the target image may be considered as an important part of content of the target image.

After obtaining the M patches, the target model may perform a series of fusion operations only on the M patches, to obtain a fusion result of the M patches. After obtaining the fusion result of the M patches, the target model may perform a series of processing on the fusion result of the M patches, to obtain a processing result of the target image. In this case, the visual task may be completed based on the processing result of the target image.

It can be learned from the foregoing method that after receiving the N patches of the target image, the target model may first evaluate the N patches, to obtain the evaluation values of the N patches. Next, the target model may select the M patches from the N patches by using the evaluation values of the N patches as a selection criterion. Then, the target model may fuse the M patches, to obtain the fusion result of the M patches. Finally, the target model may perform the series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

In a possible implementation, evaluating the N patches to obtain the evaluation values of the N patches includes: performing a first full connection on the N patches, to obtain first features of the N patches; pooling the first features of the N patches, to obtain second features of the N patches; and multiplying the first features of the N patches by the second features of the N patches, to obtain third features of the N patches. The third features of the N patches are used as the evaluation values of the N patches. In the foregoing implementation, after receiving the N patches, the target model may perform the first full connection on the N patches, to obtain the first features of the N patches. After obtaining the first features of the N patches, the target model may pool the first features of the N patches, to obtain the second features of the N patches. After obtaining the second features of the N patches, the target model may multiply the first features of the N patches by the second features of the N patches, to obtain the third features of the N patches. In this case, the third features of the N patches may be used as the evaluation values of the N patches.

In a possible implementation, the N patches form a patch array with X rows and Y columns, and determining the M patches from the N patches based on the evaluation values includes: selecting P patches with largest evaluation values from patches in an $i^{th}$ row, where i=1, ..., X, M=XP, and P≥1; or selecting K patches with largest evaluation values from patches in a $j^{th}$ column, where j=1, ..., Y, M=YK, and K≥1. In the foregoing implementation, the target model may select a patch in the following manner: After the evaluation values of the N patches are obtained, because the N patches are presented in a form of patches in X rows, the target model may select P patches with largest evaluation values from patches in a $1^{st}$ row, select P patches with largest evaluation values from patches in a $2^{nd}$ row, ..., and select P patches with largest evaluation values from patches in an $X^{th}$ row. In this way, the target model may select a total of M=XP patches in a horizontal direction. Certainly, the target model may alternatively select a patch in the following manner: After the evaluation values of the N patches are obtained, because the N patches are presented in a form of patches in Y columns, the target model may select K patches with largest evaluation values from patches in a $1^{st}$ column, select K patches with largest evaluation values from patches in a $2^{nd}$ column, ..., and select K patches with largest evaluation values from patches in a $Y^{th}$ column. In this way, the target model may select a total of M=YK patches in a vertical direction.

In a possible implementation, the method further includes: performing weighted summation on the evaluation values of the N patches and the first features of the N patches, to obtain fourth features of the N patches; and multiplying the fourth features of the N patches by evaluation values of the M patches, to obtain fifth features of the M patches; and fusing the M patches, to obtain the fusion result of the M patches includes: concatenating the M patches and the fifth features of the M patches, to obtain sixth features of the M patches; and performing a full connection on the sixth features of the M patches, to obtain seventh features of the M patches. The seventh features of the M patches are used as the fusion result of the M patches. In the foregoing implementation, after obtaining the evaluation values of the N patches, the target model may further use the evaluation values of the N patches as weights, and perform weighted summation on the first features of the N patches based on the weights, to obtain the fourth features of the N patches. After obtaining the fourth features of the N patches, the target model may further multiply the fourth features of the N patches by the evaluation values of the M patches, to obtain the fifth features of the M patches. After obtaining fifth features of the N patches, the target model may further concatenate the M patches and the fifth features of the M patches, to obtain the sixth features of the M patches. After obtaining fifth features of the N patches, the target model further performs a full connection on the sixth features of the M patches, to obtain the seventh features of the M patches. In this case, the seventh features of the M patches are used as the fusion result of the M patches.

In a possible implementation, obtaining the processing result of the target image based on the fusion result of the M patches includes: performing a second full connection on the N patches, to obtain eighth features of the N patches; performing weighted summation on the fusion result of the M patches and eighth features of the M patches, to obtain ninth features of the M patches; performing weighted summation on N-M patches other than the M patches in the N patches and eighth features of the N-M patches, to obtain ninth features of the N-M patches; and processing ninth features of the N patches, to obtain the processing result of the target image. In the foregoing implementation, the target model may further perform the second full connection on the N patches, to obtain the eighth features of the N patches. After obtaining the eighth features of the N patches, the target model may further perform weighted summation on the fusion result of the M patches and the eighth features of the M patches based on a preset weight, to obtain the ninth features of the M patches. After obtaining the eighth features of the N patches, the target model may further perform weighted summation on the N-M patches other than the M patches in the N patches and the eighth features of the N-M patches based on a preset weight, to obtain the ninth features of the N-M patches. After obtaining the ninth features of the N patches, the target model further processes the ninth features of the N patches, to obtain the processing result of the target image.

In a possible implementation, the foregoing processing includes at least one of the following: normalization, aggregation, or addition. In the foregoing implementation, the target model may superimpose the ninth features of the N patches with the N patches, to obtain tenth features of the N patches. Next, the target model may normalize the tenth features of the N patches, to obtain eleventh features of the N patches. Then, the target model may aggregate the eleventh features of the N patches in a channel dimension, to obtain twelfth features of the N patches. Finally, the target model may superimpose the twelfth features of the N patches with the ninth features of the N patches, to obtain the processing result of the target image.

In a possible implementation, before evaluating the N patches to obtain the evaluation values of the N patches, the method further includes: normalizing the N patches, to obtain N normalized patches. In the foregoing implementation, the target model may further first normalize the N patches, to obtain the N normalized patches, and then perform various processing on the N normalized patches, to obtain the ninth features of the N normalized patches.

A second aspect of embodiments of this application provides a model training method. The method includes: inputting a target image into a to-be-trained model, to obtain a processing result of the target image, where the to-be-trained model is configured to: obtain N patches of the target image; evaluate the N patches, to obtain evaluation values of the N patches, where the evaluation values of the N patches indicate importance degrees of content presented by the N patches; determine M patches from the N patches based on the evaluation values of the N patches, where N>M≥2; fuse the M patches, to obtain a fusion result of the M patches; and obtain the processing result of the target image based on the fusion result of the M patches; obtaining a target loss based on the processing result and a real processing result of the target image; and updating a parameter of the to-be-trained model based on the target loss until a model training condition is met, to obtain a target model.

The target model obtained through training in the foregoing method has an image processing function. Specifically, after receiving the N patches of the target image, the target model may first evaluate the N patches, to obtain the evaluation values of the N patches. Next, the target model may select the M patches from the N patches by using the evaluation values of the N patches as a selection criterion. Then, the target model may fuse the M patches, to obtain the fusion result of the M patches. Finally, the target model may perform a series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

In a possible implementation, the to-be-trained model is configured to: perform a first full connection on the N patches, to obtain first features of the N patches; pool the first features of the N patches, to obtain second features of the N patches; and multiply the first features of the N patches by the second features of the N patches, to obtain third features of the N patches. The third features of the N patches are used as the evaluation values of the N patches.

In a possible implementation, the N patches form a patch array with X rows and Y columns, and the to-be-trained model is configured to: select P patches with largest evaluation values from patches in an $i^{th}$ row, where i=1, ..., X, M=XP, and P≥1; or select K patches with largest evaluation values from patches in a $j^{th}$ column, where j=1, ..., Y, M=YK, and K≥1.

In a possible implementation, the to-be-trained model is further configured to: perform weighted summation on the evaluation values of the N patches and the first features of the N patches, to obtain fourth features of the N patches; and multiply the fourth features of the N patches by evaluation values of the M patches, to obtain fifth features of the M patches; and the to-be-trained model is configured to: concatenate the M patches and the fifth features of the M patches, to obtain sixth features of the M patches; and perform a full connection on the sixth features of the M patches, to obtain seventh features of the M patches. The seventh features of the M patches are used as the fusion result of the M patches.

In a possible implementation, the to-be-trained model is configured to: perform a second full connection on the N patches, to obtain eighth features of the N patches; perform weighted summation on the fusion result of the M patches and eighth features of the M patches, to obtain ninth features of the M patches; perform weighted summation on N-M patches other than the M patches in the N patches and eighth features of the N-M patches, to obtain ninth features of the N-M patches; and process ninth features of the N patches, to obtain the processing result of the target image.

In a possible implementation, the processing includes at least one of the following: normalization, aggregation, or addition.

In a possible implementation, the to-be-trained model is further configured to normalize the N patches, to obtain N normalized patches.

A third aspect of embodiments of this application provides an image processing apparatus. The apparatus includes a target model, and the apparatus includes: a first obtaining module, configured to obtain N patches of a target image; an evaluation module, configured to evaluate the N patches, to obtain evaluation values of the N patches, where the evaluation values of the N patches indicate importance degrees of content presented by the N patches; a determining module, configured to determine M patches from the N patches based on the evaluation values of the N patches, where N>M≥2; a fusion module, configured to fuse the M patches, to obtain a fusion result of the M patches; and a second obtaining module, configured to obtain a processing result of the target image based on the fusion result of the M patches.

It can be learned from the foregoing apparatus that after receiving the N patches of the target image, the target model may first evaluate the N patches, to obtain the evaluation values of the N patches. Next, the target model may select the M patches from the N patches by using the evaluation values of the N patches as a selection criterion. Then, the target model may fuse the M patches, to obtain the fusion result of the M patches. Finally, the target model may perform a series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

In a possible implementation, the evaluation module is configured to: perform a first full connection on the N patches, to obtain first features of the N patches; pool the first features of the N patches, to obtain second features of the N patches; and multiply the first features of the N patches by the second features of the N patches, to obtain third features of the N patches. The third features of the N patches are used as the evaluation values of the N patches.

In a possible implementation, the N patches form a patch array with X rows and Y columns, and the determining module is configured to: select P patches with largest evaluation values from patches in an $i^{th}$ row, where i=1, ..., X, M=XP, and P≥1; or select K patches with largest evaluation values from patches in a $j^{th}$ column, where j=1, ..., Y, M=YK, and K≥1.

In a possible implementation, the apparatus further includes: a summation module, configured to perform weighted summation on the evaluation values of the N patches and the first features of the N patches, to obtain fourth features of the N patches; and a multiplication module, configured to multiply the fourth features of the N patches by evaluation values of the M patches, to obtain fifth features of the M patches; and the fusion module is configured to: concatenate the M patches and the fifth features of the M patches, to obtain sixth features of the M patches; and perform a full connection on the sixth features of the M patches, to obtain seventh features of the M patches. The seventh features of the M patches are used as the fusion result of the M patches.

In a possible implementation, the second obtaining module is configured to: perform a second full connection on the N patches, to obtain eighth features of the N patches; perform weighted summation on the fusion result of the M patches and eighth features of the M patches, to obtain ninth features of the M patches; perform weighted summation on N-M patches other than the M patches in the N patches and eighth features of the N-M patches, to obtain ninth features of the N-M patches; and process ninth features of the N patches, to obtain the processing result of the target image.

In a possible implementation, the processing includes at least one of the following: normalization, aggregation, or addition.

In a possible implementation, the apparatus further includes: a normalization module, configured to normalize the N patches, to obtain N normalized patches.

A fourth aspect of embodiments of this application provides a model training apparatus. The apparatus includes: an input module, configured to input a target image into a to-be-trained model, to obtain a processing result of the target image, where the to-be-trained model is configured to: obtain N patches of the target image; evaluate the N patches, to obtain evaluation values of the N patches, where the evaluation values of the N patches indicate importance degrees of content presented by the N patches; determine M patches from the N patches based on the evaluation values of the N patches, where N>M≥2; fuse the M patches, to obtain a fusion result of the M patches; and obtain the processing result of the target image based on the fusion result of the M patches; an obtaining module, configured to obtain a target loss based on the processing result and a real processing result of the target image; and an updating module, configured to update a parameter of the to-be-trained model based on the target loss until a model training condition is met, to obtain a target model.

The target model obtained through training by the foregoing apparatus has an image processing function. Specifically, after receiving the N patches of the target image, the target model may first evaluate the N patches, to obtain the evaluation values of the N patches. Next, the target model may select the M patches from the N patches by using the evaluation values of the N patches as a selection criterion. Then, the target model may fuse the M patches, to obtain the fusion result of the M patches. Finally, the target model may perform a series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

In a possible implementation, the to-be-trained model is configured to: perform a first full connection on the N patches, to obtain first features of the N patches; pool the first features of the N patches, to obtain second features of the N patches; and multiply the first features of the N patches by the second features of the N patches, to obtain third features of the N patches. The third features of the N patches are used as the evaluation values of the N patches.

In a possible implementation, the N patches form a patch array with X rows and Y columns, and the to-be-trained model is configured to: select P patches with largest evaluation values from patches in an $i^{th}$ row, where i=1, ..., X, M=XP, and P≥1; or select K patches with largest evaluation values from patches in a $j^{th}$ column, where j=1, ..., Y, M=YK, and K≥1.

In a possible implementation, the to-be-trained model is further configured to: perform weighted summation on the evaluation values of the N patches and the first features of the N patches, to obtain fourth features of the N patches; and multiply the fourth features of the N patches by evaluation values of the M patches, to obtain fifth features of the M patches; and the to-be-trained model is configured to: concatenate the M patches and the fifth features of the M patches, to obtain sixth features of the M patches; and perform a full connection on the sixth features of the M patches, to obtain seventh features of the M patches. The seventh features of the M patches are used as the fusion result of the M patches.

In a possible implementation, the to-be-trained model is configured to: perform a second full connection on the N patches, to obtain eighth features of the N patches; perform weighted summation on the fusion result of the M patches and eighth features of the M patches, to obtain ninth features of the M patches; perform weighted summation on N-M patches other than the M patches in the N patches and eighth features of the N-M patches, to obtain ninth features of the N-M patches; and process ninth features of the N patches, to obtain the processing result of the target image.

In a possible implementation, the processing includes at least one of the following: normalization, aggregation, or addition.

In a possible implementation, the to-be-trained model is further configured to normalize the N patches, to obtain N normalized patches.

A fifth aspect of embodiments of this application provides an image processing apparatus. The apparatus includes a memory and a processor. The memory stores code, the processor is configured to execute the code, and when the code is executed, the image processing apparatus performs the method according to any one of the first aspect or the possible implementations of the first aspect.

A sixth aspect of embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes the memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In embodiments of this application, after receiving the N patches of the target image, the target model may first evaluate the N patches, to obtain the evaluation values of the N patches. Next, the target model may select the M patches from the N patches by using the evaluation values of the N patches as the selection criterion. Then, the target model may fuse the M patches, to obtain the fusion result of the M patches. Finally, the target model may perform the series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

## BRIEF DESCRIPTION OF DRAWINGS

FIG. 1 is a diagram of a structure of an artificial intelligence main framework;

FIG. 2a is a diagram of a structure of an image processing system according to an embodiment of this application;

FIG. 2b is a diagram of another structure of an image processing system according to an embodiment of this application;

FIG. 2c is a diagram of a related device of image processing according to an embodiment of this application;

FIG. 3 is a diagram of an architecture of a system 100 according to an embodiment of this application;

FIG. 4 is a diagram of a structure of a target model according to an embodiment of this application;

FIG. 5 is a schematic flowchart of an image processing method according to an embodiment of this application;

FIG. 6 is a diagram of a structure of a dynamic patch unit according to an embodiment of this application;

FIG. 7 is a diagram of another structure of a dynamic patch unit according to an embodiment of this application;

FIG. 8 is a diagram of another structure of a target model according to an embodiment of this application;

FIG. 9 is a diagram of another structure of a target model according to an embodiment of this application;

FIG. 10 is a schematic flowchart of a model training method according to an embodiment of this application;

FIG. 11 is a diagram of a structure of an image processing apparatus according to an embodiment of this application;

FIG. 12 is a diagram of a structure of a model training apparatus according to an embodiment of this application;

FIG. 13 is a diagram of a structure of an execution device according to an embodiment of this application;

FIG. 14 is a diagram of a structure of a training device according to an embodiment of this application; and

FIG. 15 is a diagram of a structure of a chip according to an embodiment of this application.

## DESCRIPTION OF EMBODIMENTS

Embodiments of this application provide an image processing method and a related device thereof, to effectively reduce a computational workload of image processing, thereby shortening total duration of image processing, and improving image processing efficiency.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants mean to cover the non-exclusive inclusion, so that a process, method, system, product, or device that includes a series of units is not necessarily limited to those units, but may include other units not expressly listed or inherent to such a process, method, product, or device.

With rapid development of computer technologies, a neural network model in an AI technology is used in more fields such as autonomous driving and identity recognition to complete various visual tasks, for example, image classification, target detection, and instance segmentation. To explore a neural network model with a simpler structure, a visual multilayer perceptron emerges accordingly. As a new type of visual backbone neural network, the visual multilayer perceptron has achieved good effect in many visual tasks.

Currently, when an image in a visual task needs to be processed, the image may be first divided into a plurality of patches, and the plurality of patches are input into a visual multilayer perceptron model. After the plurality of patches of the image are obtained, for any one of the plurality of patches, the visual multilayer perceptron model may fuse the patch with several patches around the patch, to obtain a fusion result of the image. This may also be true for a patch other than the patch in the plurality of patches. Therefore, the visual multilayer perceptron model may obtain a fusion result of the plurality of patches. Subsequently, the visual multilayer perceptron model may perform a series of processing on the fusion result of the plurality of patches, to obtain a processing result of the image. The processing result of the image may be used to complete the visual task.

In the foregoing process, because the visual multilayer perceptron model needs to fuse all the patches, a very large computational workload is required, leading not only to excessive total duration of image processing, but also resulting in inefficient image processing.

Further, in a related technology, a part of the plurality of patches of the image may be filtered out by using another neural network model, and then a remaining patch is input into the visual multilayer perceptron model for processing, to obtain the processing result of the image. This may properly reduce the computational workload of the visual multilayer perceptron model. However, some additional neural network models need to be introduced, and extra work needs to be performed in both a model training phase and a model application phase.

To resolve the foregoing problem, an embodiment of this application provides an image processing method. The method may be implemented in combination with an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using knowledge. In other words, the artificial intelligence technology is a branch of computer science, and attempts to understand essence of intelligence and produce a new intelligent machine that can react in a manner similar to human intelligence. Using artificial intelligence to process data is a common application manner of artificial intelligence.

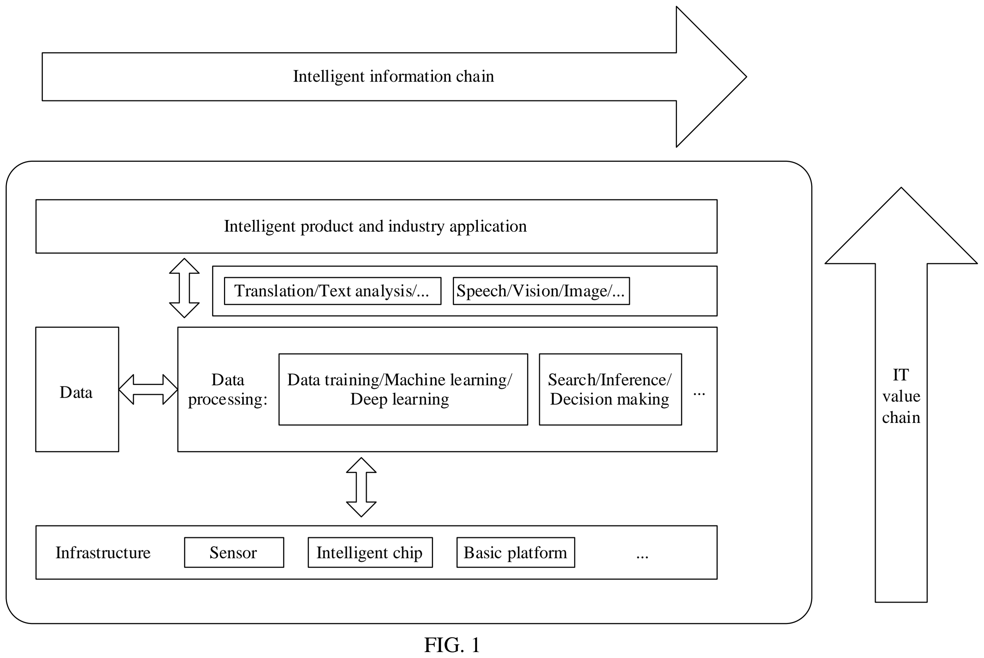

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to internet of things data of a conventional device, and includes service data of an existing system and perception data such as force, displacement, a liquid level, a temperature, and humidity.

(3) Data processing

Data processing usually includes data training, machine learning, deep learning, search, inference, decision making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is search and matching.

Decision making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capability may be an algorithm or a general system, for example, translation, text analysis, computer vision processing, speech recognition, and image recognition.

(5) Intelligent product and industry application

Intelligent products and industry applications are products and applications of the artificial intelligence system in various fields, and are encapsulation for an overall artificial intelligence solution, to productize intelligent information decision-making and implement applications. Application fields thereof mainly include an intelligent terminal, intelligent transportation, intelligent healthcare, autonomous driving, smart city, and the like.

The following describes several application scenarios of this application.

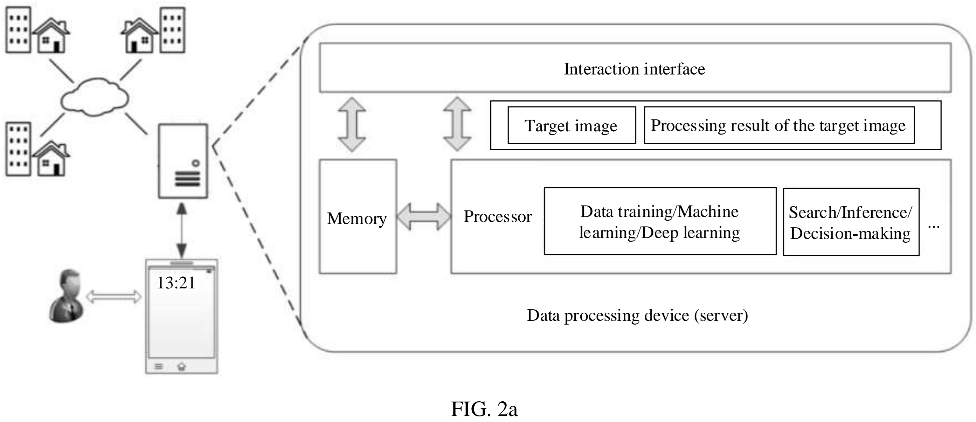

FIG. 2a is a diagram of a structure of an image processing system according to an embodiment of this application. The image processing system includes user equipment and a data processing device. The user equipment includes an intelligent terminal such as a mobile phone, a personal computer, or an information processing center. The user equipment is an image processing initiator, and is used as an image processing request initiator. Usually, a user initiates a request by using the user equipment.

The data processing device may be a device or a server that has a data processing function, for example, a cloud server, a network server, an application server, or a management server. The data processing device receives an image processing request from the intelligent terminal through an interaction interface, and then performs image processing in manners such as machine learning, deep learning, search, inference, and decision-making by using a data storage memory and a data processing processor. The memory in the data processing device may be a general name, and includes a local storage and a database storing historical data. The database may be in the data processing device, or may be in another network server.

In the image processing system shown in FIG. 2a, the user equipment may receive an instruction of the user. For example, the user equipment may obtain an image in a visual task entered/selected by the user, and then initiate a request to the data processing device, so that the data processing device executes an image processing application for the image obtained by the user equipment, to obtain a corresponding processing result of the image. For example, the user equipment may obtain an image entered by the user, and then initiate an image processing request to the data processing device, so that the data processing device performs a series of processing on the image, to obtain a processing result of the image, for example, a classification result of the image, or a detection box area surrounding a target object in the image. Therefore, the processing result of the image may be used to complete the visual task of the user.

In FIG. 2a, the data processing device may perform an image processing method in embodiments of this application.

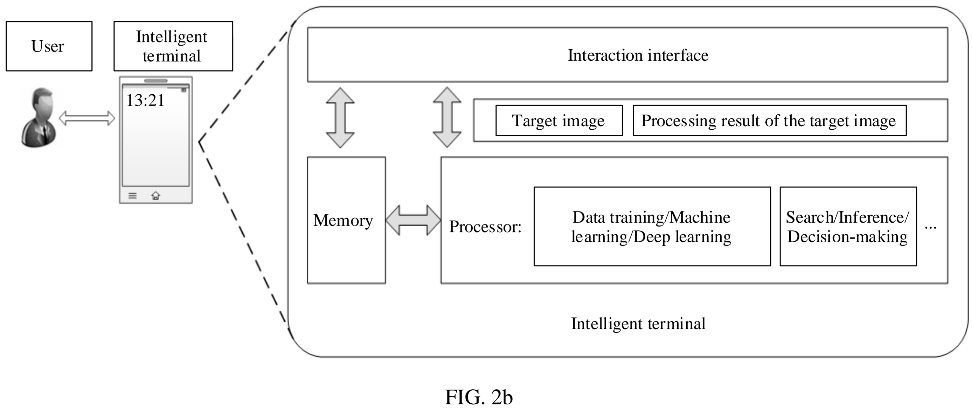

FIG. 2b is a diagram of another structure of an image processing system according to an embodiment of this application. In FIG. 2b, user equipment directly serves as a data processing device. The user equipment can directly obtain an input from a user, and the input is directly processed by hardware of the user equipment. A specific process is similar to that in FIG. 2a. For details, refer to the foregoing descriptions. Details are not described herein again.

In the image processing system shown in FIG. 2b, the user equipment may receive an instruction of the user. For example, the user equipment may obtain an image entered by the user, and then perform a series of processing on the image, to obtain a processing result of the image, for example, a classification result of the image, or a detection box area surrounding a target object in the image. Therefore, the processing result of the image may be used to complete a visual task of the user.

In FIG. 2b, the user equipment may perform an image processing method in embodiments of this application.

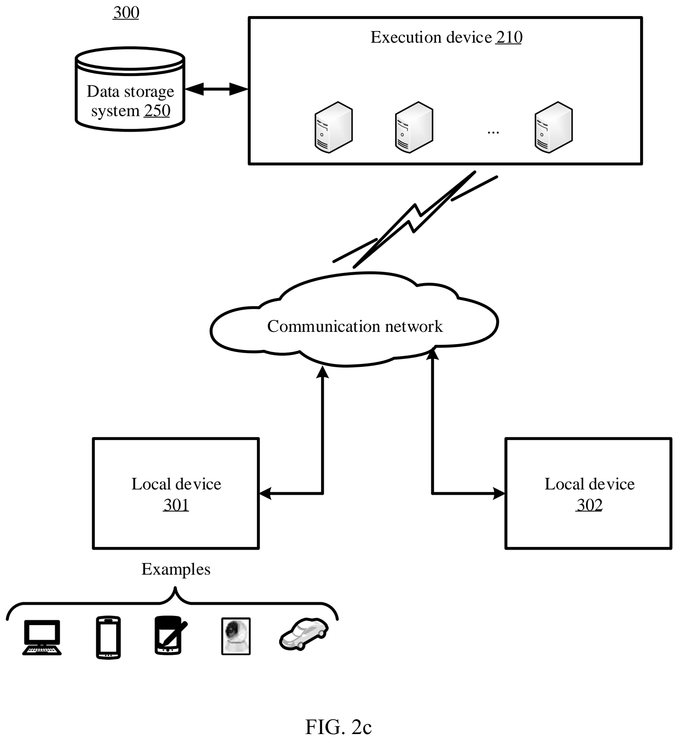

FIG. 2c is a diagram of a related device of image processing according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training, machine learning, or deep learning by using a neural network model or another model (for example, a model based on a support vector machine), and perform an image processing application on an image by using a model obtained through final data training or learning, to obtain a corresponding processing result.

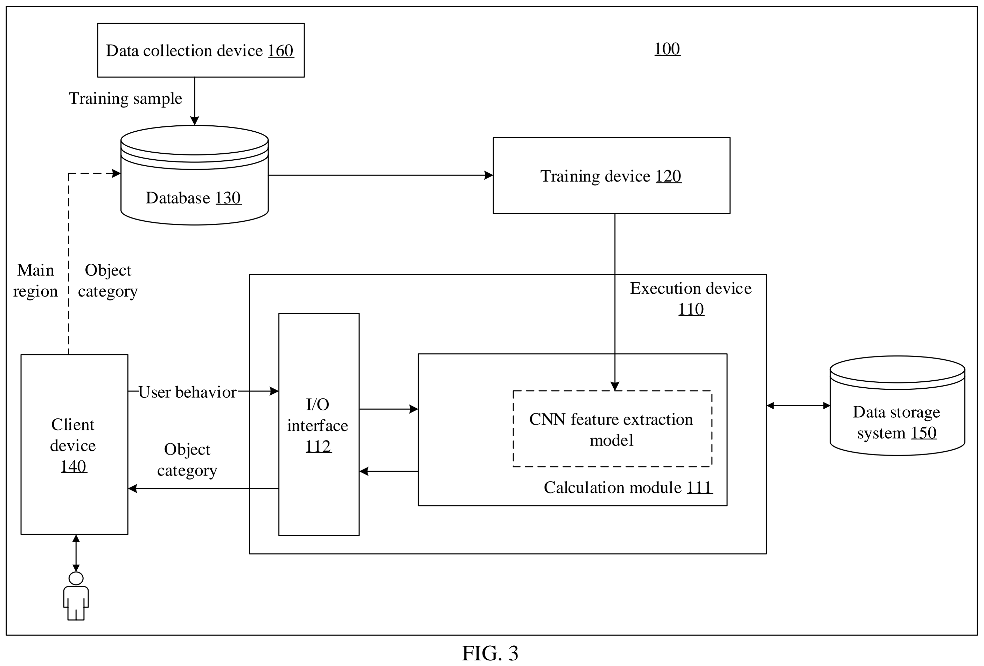

FIG. 3 is a diagram of an architecture of a system 100 according to an embodiment of this application. In FIG. 3, an execution device 110 is provided with an input/output (input/output, I/O) interface 112, to exchange data with an external device. A user may input data to the I/O interface 112 through a client device 140. The input data in this embodiment of this application may include each to-be-scheduled task, a resource that may be invoked, and another parameter.

In a process in which the execution device 110 preprocesses the input data, or in a process in which a calculation module 111 of the execution device 110 performs related processing such as calculation (for example, performs function implementation of a neural network in this application), the execution device 110 may invoke data, code, and the like in a data storage system 150 for corresponding processing, and may further store, in the data storage system 150, data, an instruction, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data. The corresponding target models/rules may be used to achieve the foregoing objectives or complete the foregoing tasks, thereby providing a required result for the user. The training data may be stored in a database 130, and is a training sample collected by a data collection device 160.

In a case shown in FIG. 3, the user may manually provide the input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively serve as a data collection end, to collect, as new sample data, the input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A location relationship between devices, components, modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computing work of the calculation module 111. The chip may alternatively be disposed in the training device 120 shown in FIG. 3, to complete training work of the training device 120 and output the target model/rule.

The neural network processing unit NPU is mounted on a host central processing unit (central processing unit, CPU) (host CPU) as a coprocessor, and the host CPU assigns a task. A core part of the NPU is an operation circuit, and a controller controls the operation circuit to extract data in a memory (a weight memory or an input memory) and perform an operation.

In some implementations, the operation circuit internally includes a plurality of processing units (process engine, PE). In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches data corresponding to the matrix B from a weight memory, and caches the data on each PE in the operation circuit. The operation circuit fetches data of the matrix A from the input memory, performs a matrix operation with the matrix B, to obtain a partial result or a final result of a matrix, and stores the partial result or the final result in an accumulator (accumulator).

A vector calculation unit may perform further processing such as vector multiplication, vector addition, an exponent operation, a logarithm operation, or value comparison on an output of the operation circuit. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified cache. For example, the vector calculation unit may apply a nonlinear function to an output, for example, a vector of an accumulated value, of the operation circuit to generate an activation value. In some implementations, the vector calculation unit generates a normalized value, a combined value, or both a normalized value and a combined value. In some implementations, the processed output vector can be used as an activate input to the operation circuit, for example, the processed output vector can be used at a subsequent layer of the neural network.

A unified memory is configured to store input data and output data.

For weight data, a storage unit access controller (direct memory access controller, DMAC) directly transfers input data in the external memory to the input memory and/or the unified memory, stores, in the weight memory, weight data in the external memory, and stores, in the external memory, the data in the unified memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions cached in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes related terms and related concepts such as the neural network in embodiments of this application.

(1) Neural network

The neural network may include a neuron. The neuron may be an operation unit that uses $x_s$ and an intercept of 1 as an input. An output of the operation unit may be as follows:

$$h_{W,b}(x) = f(W^T x) = f(\sum\nolimits_{s=1}^{n} W_s x_s + b)$$

$$(1)$$

Herein, s=1, 2, ..., n, n is a natural number greater than 1, $W_s$ is a weight of $x_s$, b is a bias of the neuron, and f is an activation function (activation function) of the neuron, and is used to introduce a nonlinear feature into the neural network to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx+b)$. From a physical layer, work at each layer of the neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operations 1, 2, and 3 are completed by $Wx,$ the operation 4 is completed by $+b$, and the operation 5 is implemented by $a()$. The word "space" is used herein for expression because a classified object is not a single thing, but a type of things. Space is a set of all individuals of this type of things. W is a weight vector, and each value in the vector represents a weight value of one neuron at this layer of a neural network. The vector $W$ determines space transformation from the input space to the output space described above. In other words, a weight $W$ at each layer controls how to transform space. A purpose of training the neural network is to finally obtain a weight matrix (a weight matrix including vectors $W$ at a plurality of layers) at all layers of a trained neural network. Therefore, a training process of the neural network is essentially a manner of learning control of spatial transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In the training process, the neural network may correct a value of a parameter in an initial neural network model based on an error back propagation (back propagation, BP) algorithm, so that a reconstruction error loss of the neural network model becomes smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

The following describes a method provided in this application from a neural network training side and a neural network application side.

A model training method provided in embodiments of this application relates to data sequence processing, and may be specifically applied to methods such as data training, machine learning, and deep learning, to perform symbolic and formalized intelligent information modeling, extraction, preprocessing, training, and the like on training data (for example, a target image in the model training method provided in embodiments of this application), and finally obtain a trained neural network (for example, a target model in the model training method provided in embodiments of this application). In addition, in an image processing method provided in embodiments of this application, input data (for example, a target image in the image processing method provided in embodiments of this application) may be input into the trained neural network by using the trained neural network, to obtain output data (for example, a processing result of the target image in the image processing method provided in embodiments of this application). It should be noted that, the model training method and the image processing method provided in embodiments of this application are inventions generated based on a same idea, or may be understood as two parts in a system, or two phases of an entire procedure, for example, a model training phase and a model application phase.

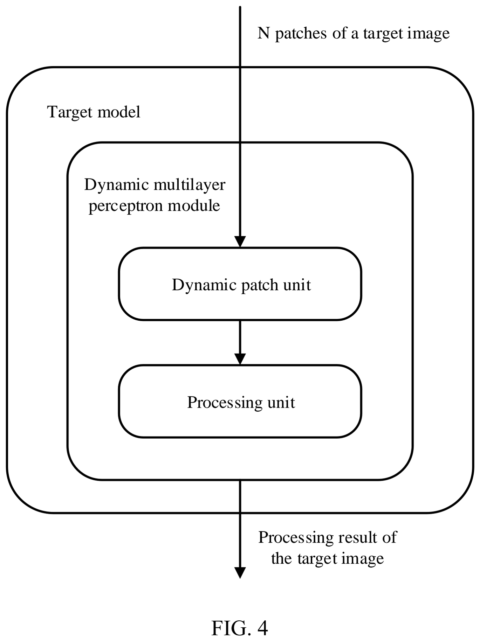

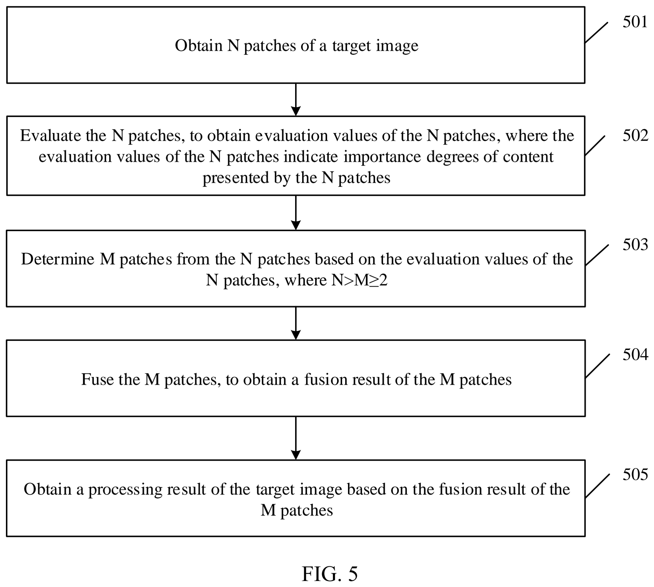

The image processing method provided in embodiments of this application may be implemented by using a new type of visual multilayer perceptron model. Subsequently, the new type of visual multilayer perceptron model is referred to as a target model, and the target model may have a plurality of structures. The following first describes a target model of a first structure. FIG. 4 is a diagram of a structure of a target model according to an embodiment of this application. As shown in FIG. 4, the target model includes a dynamic multilayer perceptron (dynamic MLP) module, and the dynamic multilayer perceptron module includes a dynamic patch (dynamic-token) unit and a processing unit. To understand a working procedure of the target model shown in FIG. 4, the following describes the working procedure with reference to FIG. 5. FIG. 5 is a schematic flowchart of an image processing method according to an embodiment of this application. As shown in FIG. 5, the method includes the following steps.

501: Obtain N patches of a target image.

In this embodiment, when a target image in a visual task needs to be processed, the target image may be first divided into N patches. The N patches may be presented by using a patch array with X rows and Y columns (in other words, the patch array includes X rows of patches, or the patch array includes Y columns of patches). N is a positive integer greater than 2, and X and Y are positive integers greater than or equal to 2.

After the N patches of the target image are obtained, the N patches may be input into the target model (a trained neural network model), to perform a series of processing on the N patches by using the target model.

502: Evaluate the N patches, to obtain evaluation values of the N patches, where the evaluation values of the N patches indicate importance degrees of content presented by the N patches.

After receiving the N patches of the target image, the target model may first separately evaluate the N patches, to correspondingly obtain the evaluation values of the N patches. It should be noted that the evaluation values of the N patches indicate the importance degrees (which may also be understood as degrees of richness of the content presented by the N patches, degrees of contribution of the N patches to the visual task, or the like) of the content presented by the N patches. For any one of the N patches, a larger evaluation value of the patch indicates more important content presented by the patch, and a smaller evaluation value of the patch indicates less important content presented by the patch.

Specifically, the target model may obtain the evaluation values of the N patches in the following manner:

(1) After receiving the N patches, the dynamic patch unit of the target model may perform a first full connection (full connection, FC) on the N patches, to obtain first features of the N patches. It should be noted that a height of an entirety (namely, the target image) including the N patches is the same as a height of an entirety (namely, a first feature map) including the first features of the N patches, and a width of the entirety including the N patches is the same as a width of the entirety including the first features of the N patches. However, for any one of the N patches, a quantity of channels of the patch is greater than a quantity of channels of a first feature of the patch.

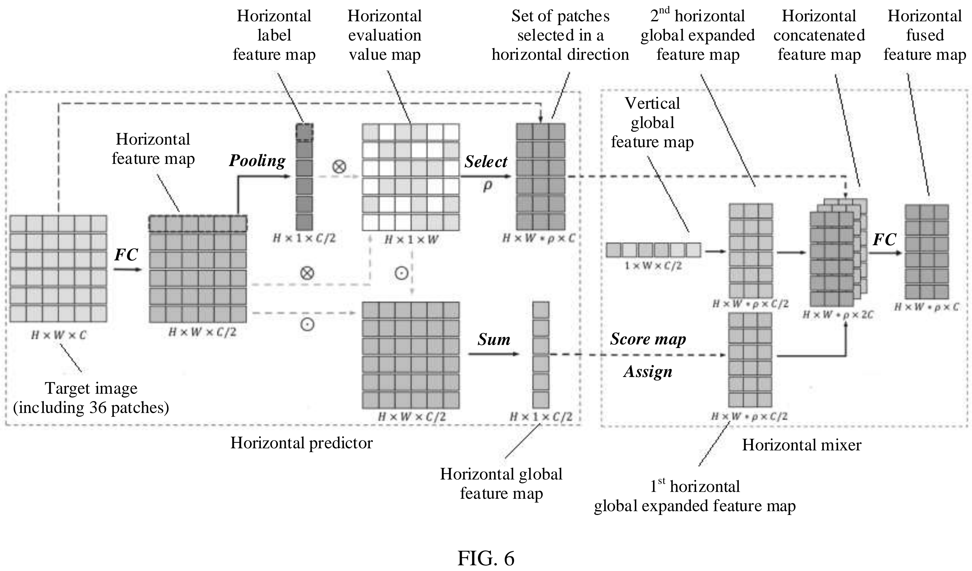

For example, as shown in FIG. 6 (FIG. 6 is a diagram of a structure of a dynamic patch unit according to an embodiment of this application), it is assumed that the target image is divided into 36 patches, and the 36 patches are disposed in a form of six rows and six columns. Therefore, a total height of the 36 patches is H=6, a total width of the 36 patches is W=6, and a quantity of channels of each of the 36 patches is C. After the dynamic patch unit receives the 36 patches, a horizontal predictor (horizontal predictor) of the dynamic patch unit may perform a full connection on the 36 patches based on the following formula, to obtain horizontal features (the first features), namely, a horizontal feature map (the first feature map), of the 36 patches:

$$X^{h} = FC(X, W_{h}) \qquad\qquad (2)$$

In the foregoing formula, $X$ is the target image, $W_{h}$ is a parameter used for the full connection, and $X^{h}$ is the horizontal feature map, including the horizontal features of the 36 patches. It should be noted that a height of $X^{h}$ is H, a width of a horizontal feature of $X^{h}$ is W, and a quantity of channels of $X^{h}$ is C/2.

Meanwhile, a vertical predictor (vertical predictor) of the dynamic patch unit may also perform a similar operation on the 36 patches, to obtain a vertical feature map $X^{v}$ (the first feature map), including vertical features (the first features) of the 36 patches. It should be noted that a height of $X^{v}$ is H, a width of $X^{v}$ is W, and a quantity of channels of $X^{v}$ is C/2.

(2) After obtaining the first features of the N patches, the dynamic patch unit may pool (pooling) the first features of the N patches, to obtain second features of the N patches. It should be noted that after pooling (dimension reduction), there may be two cases. In a first case, the height of the entirety including the first features of the N patches is the same as a height of an entirety (namely, a second feature map) including the second features of the N patches, and the width of the entirety including the first features of the N patches is greater than the width of the entirety including the first features of the N patches. However, for any one of the N patches, a quantity of channels of a first feature of the patch is the same as a quantity of channels of a second feature of the patch. In a second case, the height of the entirety including the first features of the N patches is greater than a height of an entirety including the second features of the N patches, and the width of the entirety including the first features of the N patches is the same as the width of the entirety including the first features of the N patches. However, for any one of the N patches, a quantity of channels of a first feature of the patch is the same as a quantity of channels of a second feature of the patch.

Still as described in the foregoing example, after obtaining $X^h$, the horizontal predictor may pool $X^h$, to obtain a horizontal label feature map $X_s^h$ (the second feature map), including horizontal label features (the second features) of the 36 images. It should be noted that a height of $X_s^h$ is H, a width of $X_s^h$ is 1, and a quantity of channels of $X_s^h$ is C/2.

Meanwhile, after obtaining $X^v$, the vertical predictor may also perform a similar operation on $X^v$, to obtain a vertical label feature map $X_s^v$ (the second feature map), including vertical label features (the second features) of the 36 patches. It should be noted that a height of $X_s^v$ is 1, a width of $X_s^v$ is W, and a quantity of channels of $X_s^v$ is C/2.

(3) After obtaining the second features of the N patches, the dynamic patch unit may multiply (for example, point multiplication) the first features of the N patches by the second features of the N patches, to obtain third features of the N patches. In this case, the third features of the N patches may be used as the evaluation values of the N patches. It should be noted that the height of the entirety including the first features of the N patches is the same as a height of an entirety (namely, a third feature map) including the third features of the N patches, and the width of the entirety including the first features of the N patches is the same as a width of the entirety including the third features of the N patches. However, for any one of the N patches, a quantity of channels of a first feature of the patch is greater than a quantity of channels of a third feature of the patch.

Still as described in the foregoing example, after obtaining $X_s^h$, the horizontal predictor may perform point multiplication on $X_s^h$ and $X^h$ based on the following formula, to obtain a horizontal evaluation value map:

$$S^h = Soft\max(X_s^h \otimes (X^h)^T) \qquad (3)$$

In the foregoing formula, $S^h$ is the horizontal evaluation value map, including horizontal evaluation values of the 36 patches. It should be noted that a height of $S^h$ is H, a width of $S^h$ is W, and a quantity of channels of $S^h$ is 1.

Meanwhile, the vertical predictor may also perform a similar operation on $X^v$ and $X_s^v$, to obtain a vertical evaluation value map $S^v$, including vertical evaluation values of the 36 patches. It should be noted that a height of $S^v$ is H, a width of $S^v$ is W, and a quantity of channels of $S^v$ is 1.

503: Determine M patches from the N patches based on the evaluation values of the N patches, where N>M≥2.

After obtaining the evaluation values of the N patches, the target model may select the M patches from the N patches based on a value relationship between the evaluation values of the N patches. Herein, M is a positive integer less than N and greater than or equal to 2. In this case, the M patches selected by the target model from the N patches forming the target image may be considered as an important part of content of the target image, and remaining N-M patches that are not selected may be considered as an unimportant part of the content of the target image.

Specifically, the target model may select the M patches in the following manner:

(1) After the evaluation values of the N patches are obtained, because the N patches are presented in a form of the patches in the X rows (patches in each row include Y patches), the dynamic patch unit may select P patches (P is a positive integer greater than or equal to 1) with largest evaluation values from patches in a 1st row based on a specific patch selection ratio ρ=P/Y, select P patches with largest evaluation values from patches in a 2nd row, ..., and select P patches with largest evaluation values from patches in an Xth row. In this way, the dynamic patch unit may select a total of M=XP patches in a horizontal direction.

(2) After the evaluation values of the N patches are obtained, because the N patches are presented in a form of the patches in the Y columns (patches in each column include X patches), the dynamic patch unit may select K patches (K is a positive integer greater than or equal to 1) with largest evaluation values from patches in a 1st column based on a specific patch selection ratio ρ=K/X, select K patches with largest evaluation values from patches in a 2nd column, ..., and select K patches with largest evaluation values from patches in a Yth column. In this way, the dynamic patch unit may select a total of M=YK patches in a vertical direction.

Still as described in the foregoing example, after $S^h$ is obtained, because the 36 patches are presented in a form of six rows, the horizontal predictor may select three patches with largest evaluation values from each row based on ρ=0.5, and therefore, may obtain a total of 18 patches in the horizontal direction. A set of numbers of these patches may be denoted as follows:

$$id_h = Top - \rho(S^h, \rho) \tag{4}$$

In the foregoing formula, $id_h$ is the set of the numbers of the patches selected in the horizontal direction.

A set of the patches selected in the horizontal direction may be denoted as follows:

$$\overline{X}^h = \{X_u | \ u \in id_h\} \tag{5}$$

In the foregoing formula, $\overline{X}^h$ is the set of the patches selected in the horizontal direction, $X_u^h$ is a specific patch selected in the horizontal direction, and $u$ is a number of the patch.

Meanwhile, after $S^v$ is obtained, because the 36 patches are presented in a form of six columns, the horizontal predictor may select three patches with largest evaluation values from each column based on ρ=0.5, and therefore, may obtain a total of 18 patches in the vertical direction. Similarly, a set of the patches selected in the vertical direction may be denoted as $\overline{X}^v$.

504: Fuse the M patches, to obtain a fusion result of the M patches.

After obtaining the M patches, the target model may perform a series of fusion operations on the M patches, but does not perform these fusion operations on the N-M patches, to obtain the fusion result of the M patches.

Specifically, the target model may obtain the fusion result of the M patches in the following manner:

(1) After obtaining the evaluation values of the N patches, the dynamic patch unit may further use the evaluation values of the N patches as weights, and perform weighted summation on the first features of the N patches based on the weights, to obtain fourth features of the N patches. It should be noted that after weighted summation (dimension reduction), there may be two cases. In a first case, the height of the entirety including the first features of the N patches is the same as a height of an entirety (namely, a fourth feature map) including the fourth features of the N patches, and the width of the entirety including the first features of the N patches is greater than a width of the entirety including the fourth features of the N patches. However, for any one of the N patches, a quantity of channels of a first feature of the patch is the same as a quantity of channels of a fourth feature of the patch. In a second case, the height of the entirety including the first features of the N patches is greater than a height of an entirety including the fourth features of the N patches, and the width of the entirety including the first features of the N patches is the same as a width of the entirety including the fourth features of the N patches. However, for any one of the N patches, a quantity of channels of a first feature of the patch is the same as a quantity of channels of a fourth feature of the patch.

Still as described in the foregoing example, after obtaining $S^h$, the horizontal predictor may perform weighted summation on $S^h$ and $X^h$ based on the following formula, to obtain a horizontal global feature map:

$$X_g^h = \sum_i (S_i^h \odot X_i^h), i = 1, 2, ..., H \tag{6}$$

In the foregoing formula, $X_g^h$ is the horizontal global feature map (the fourth feature map), including horizontal global features (the fourth features) of the 36 patches, $S_i^h$ is an evaluation value of a patch in an $i^{th}$ row, $X_i^h$ is a horizontal feature of the patch in the $i^{th}$ row, and H=6. It should be noted that a height of $X_g^h$ is H, a width of $X_g^h$ is 1, and a quantity of channels of $X_g^h$ is C/2.

Meanwhile, the vertical predictor may also perform a similar operation on $S^v$ and $X^v$, to obtain a vertical global feature map $X_g^v$ (the fourth feature maps), including vertical global features (the fourth features) of the 36 patches. It should be noted that a height of $X_g^v$ is 1, a width of $X_g^v$ is W, and a quantity of channels of $X_g^v$ is C/2.

(2) After obtaining the fourth features of the N patches, the dynamic patch unit may further multiply (for example, point multiplication) the fourth features of the N patches by evaluation values of the M patches, to obtain fifth features of the M patches. It should be noted that a height of an entirety including the M patches is the same as a height of an entirety (namely, a fifth feature map) including the fifth features of the M patches, and a width of the entirety including the M patches is the same as a width of the entirety including the fifth features of the M patches. However, for any one of the M patches, a quantity of channels of the patch is greater than a quantity of channels of a fifth feature of the patch.

Still as described in the foregoing example, after obtaining $X_g^h$, the horizontal predictor may send $X_g^h$ to a horizontal mixer (horizontal mixer), and similarly, the vertical predictor may also send $X_g^v$ to the horizontal mixer. In this case, the horizontal mixer may process $X_g^h$ based on the following formula, to obtain a 1st horizontal global expanded feature map:

$$\hat{S}^h = \{ S_u^h \mid u \in id_h \}$$
$$\hat{X}_{g1}^h = (\hat{S}^h)^T \otimes X_g^h \tag{7}$$

In the foregoing formula, $\hat{X}_{g1}^h$ is the 1st horizontal global expanded feature map (the fifth feature map), including 1st global expanded features (the fifth features) of the 18 patches selected in the horizontal direction, $\hat{S}^h$ is a set of evaluation values of the 18 patches selected in the horizontal direction, and $S_u^h$ is an evaluation value of a specific patch selected in the horizontal direction. It should be noted that a height of $\hat{X}_{g1}^h$ is H, a width of $\hat{X}_{g1}^h$ is W×ρ (namely, 3), and a quantity of channels of $\hat{X}_{g1}^h$ is C/2.

Then, the horizontal mixer may further process $X_g^v$ based on the following formula, to obtain a 2nd horizontal global expanded feature map:

$$\hat{X}_{g2}^h = \hat{S}^h \otimes X_g^v \tag{8}$$

In the foregoing formula, $\hat{X}_{g2}^h$ is the 2nd horizontal global expanded feature map (the fifth feature map), including 2nd global expanded features (the fifth features) of the 18 patches selected in the horizontal direction. It should be noted that a height of $\hat{X}_{g2}^h$ is H, a width of $\hat{X}_{g2}^h$ is W×ρ (namely, 3), and a quantity of channels of $\hat{X}_{g2}^h$ is C/2.

Similarly, after obtaining $X_g^v$, the vertical predictor may send $X_g^v$ to a vertical mixer (vertical mixer), and similarly, the horizontal predictor may also send $X_g^h$ to the vertical mixer. In this case, the vertical mixer may also perform similar processing on each of $X_g^v$ and $X_g^h$, to obtain a 1st vertical global expanded feature map $\hat{X}_{g1}^v$ (the fifth feature map) and a 2nd vertical global expanded feature map $\hat{X}_{g2}^v$ (the fifth feature map), $\hat{X}_{g1}^v$ includes 1st global expanded features (the fifth feature) of the 18 patches selected in the vertical direction, and $\hat{X}_{g2}^v$ includes 2nd global expanded features (the foregoing fifth features) of the 18 patches selected in the vertical direction. It should be noted that a height of $\hat{X}_{g1}^v$ is H×ρ (namely, 3), a width of $\hat{X}_{g1}^v$ is W, and a quantity of channels of $\hat{X}_{g1}^v$ is C/2. A height of $\hat{X}_{g2}^v$ is H×ρ (namely, 3), a width of $\hat{X}_{g2}^v$ is W, and a quantity of channels of $\hat{X}_{g2}^v$ is C/2.

(3) After obtaining fifth features of the N patches, the dynamic patch unit may further concatenate the M patches and the fifth features of the M patches, to obtain sixth features of the M patches. It should be noted that the height of the entirety including the M patches is the same as a height of an entirety (namely, a sixth feature map) including the sixth features of the M patches, and the width of the entirety including the M patches is the same as a width of the entirety including the sixth features of the M patches. However, for any one of the M patches, a quantity of channels of the patch is less than a quantity of channels of a sixth feature of the patch.

Still as described in the foregoing example, the horizontal mixer may further concatenate $\overline{X}^h$, $\hat{X}^h_{g1}$, and $\hat{X}^h_{g2}$, to obtain a horizontal concatenated feature map $Concat([\overline{X}^h, \hat{X}^h_{g1}, \hat{X}^h_{g2}])$ (the sixth feature map), including concatenated features (the sixth features) of the 18 patches selected in the horizontal direction. It should be noted that a height of $Concat([\overline{X}^h, \hat{X}^h_{g1}, \hat{X}^h_{g2}])$ is H, a width of $Concat([\overline{X}^h, \hat{X}^h_{g1}, \hat{X}^h_{g2}])$ is W×ρ, and a quantity of channels of $Concat([\overline{X}^h, \hat{X}^h_{g1}, \hat{X}^h_{g2}])$ is 2C. The vertical mixer may further concatenate $\overline{X}^v$, $\hat{X}^v_{g1}$, and $\hat{X}^v_{g2}$, to obtain a vertical concatenated feature map $Concat([\overline{X}^v, \hat{X}^v_{g1}, \hat{X}^v_{g2}])$ (the sixth feature map), including concatenated features (the sixth features) of the 18 patches selected in the vertical direction. It should be noted that a height of $Concat([\overline{X}^v, \hat{X}^v_{g1}, \hat{X}^v_{g2}])$ is H×ρ, a width of $Concat([\overline{X}^v, \hat{X}^v_{g1}, \hat{X}^v_{g2}])$ is W, and a quantity of channels of $Concat([\overline{X}^v, \hat{X}^v_{g1}, \hat{X}^v_{g2}])$ is 2C.

(4) After obtaining the fifth features of the N patches, the dynamic patch unit further performs a full connection on the sixth features of the M patches, to obtain seventh features of the M patches. In this case, the seventh features of the M patches are used as the fusion result of the M patches. It should be noted that the height of the entirety including the M patches is the same as a height of an entirety (namely, a seventh feature map) including the seventh features of the M patches, and the width of the entirety including the M patches is the same as a width of the entirety including the seventh features of the M patches. For any one of the M patches, a quantity of channels of the patch is the same as a quantity of channels of a seventh feature of the patch.

Still as described in the foregoing example, the horizontal mixer may further obtain a horizontal fused feature map based on the following formula:

$$X^h_o = FC(Concat([\overline{X}^h, \hat{X}^h_{g1}, \hat{X}^h_{g2}]), W^h_o) \qquad (9)$$

In the foregoing formula, $X^h_o$ is a horizontal fused feature map (the seventh feature map), including fused features (the seventh features) of the 18 patches selected in the horizontal direction. It should be noted that a height of $X^h_o$ is H, a width of $X^h_o$ is W×ρ, and a quantity of channels of $X^h_o$ is C.

Meanwhile, the vertical mixer may also obtain a vertical fused feature map $X^v_o$ (the seventh feature map), including fused features (the seventh feature) of the 18 patches selected in the vertical direction. It should be noted that a height of $X^v_o$ is H×ρ, a width of $X^v_o$ is W, and a quantity of channels of $X^v_o$ is C.

505: Obtain a processing result of the target image based on the fusion result of the M patches.

After obtaining the fusion result of the M patches, the target model may perform a series of processing on the fusion result of the M patches, to obtain the processing result of the target image. In this case, the visual task may be completed based on the processing result of the target image.

Specifically, the target model may obtain the processing result of the target image in the following manner:

(1) The dynamic patch unit may further perform a second full connection on the N patches, to obtain eighth features of the N patches. It should be noted that a height of an entirety including the N patches is the same as a height of an entirety (namely, an eighth feature map) including the eighth features of the N patches, and a width of the entirety including the N patches is the same as a width of the entirety including the eighth features of the N patches. For any one of the N patches, a quantity of channels of the patch is the same as a quantity of channels of an eighth feature of the patch.

(2) After obtaining the eighth features of the N patches, the dynamic patch unit may further perform weighted summation on the fusion result of the M patches and the eighth features of the M patches based on a preset weight, to obtain ninth features of the M patches. It should be noted that a height of an entirety including the M patches is the same as a height of an entirety (namely, a part of the eighth feature map) including eighth features of the M patches, and a width of the entirety including the M patches is the same as a width of the entirety including the eighth features of the M patches. For any one of the M patches, a quantity of channels of the patch is the same as a quantity of channels of an eighth feature of the patch.

(3) After obtaining the eighth features of the N patches, the dynamic patch unit may further perform weighted summation on the N-M patches other than the M patches in the N patches and eighth features of the N-M patches based on a preset weight, to obtain ninth features of the N-M patches. It should be noted that a height of an entirety including the N-M patches is the same as a height of an entirety (namely, the other part of the eighth feature map) including the eighth features of the N-M patches, and a width of the entirety including the N-M patches is the same as a width of the entirety including the eighth features of the N-M patches. For any one of the N-M patches, a quantity of channels of the patch is the same as a quantity of channels of an eighth feature of the patch.

(4) After obtaining ninth features of the N patches, the dynamic patch unit further sends the ninth features of the N patches to the processing unit, so that the processing unit processes the ninth features of the N patches, to obtain the processing result of the target image. It should be noted that the height of the entirety including the N patches is the same as a height of an entirety (namely, a ninth feature map) including the ninth features of the N patches, and the width of the entirety including the N patches is the same as the width of the entirety including the eighth features of the N patches. For any one of the N patches, a quantity of channels of the patch is the same as a quantity of channels of a ninth feature of the patch.

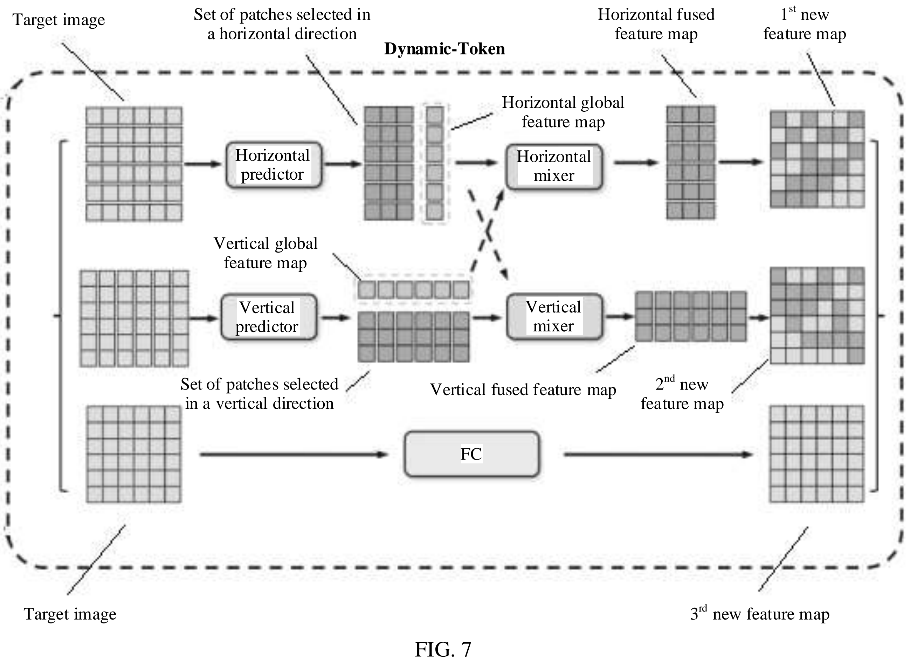

For example, as shown in FIG. 7 (FIG. 7 is a diagram of another structure of a dynamic patch unit according to an embodiment of this application, and FIG. 7 is drawn based on FIG. 6), after the fused features of the 18 patches selected in the horizontal direction are obtained, the fused features of the 18 images and remaining 18 patches that are not selected in the horizontal direction may form a 1st new feature map. Similarly, after the fused features of the 18 patches selected in the vertical direction are obtained, the fused features of the 18 images and remaining 18 patches that are not selected in the vertical direction may form a 2nd new feature map. The dynamic patch unit may further perform a full connection operation on the original 36 patches, to obtain a 3rd new feature map (the eighth feature map), including specific features (the eighth features) of the 36 patches. It should be noted that heights of the three new feature maps are all H, widths are all W, and quantities of channels are all C. In this case, the dynamic patch unit may perform weighted summation on the three new feature maps, to obtain a latest feature map (the ninth feature map), including latest features (the ninth features) of the 36 patches.

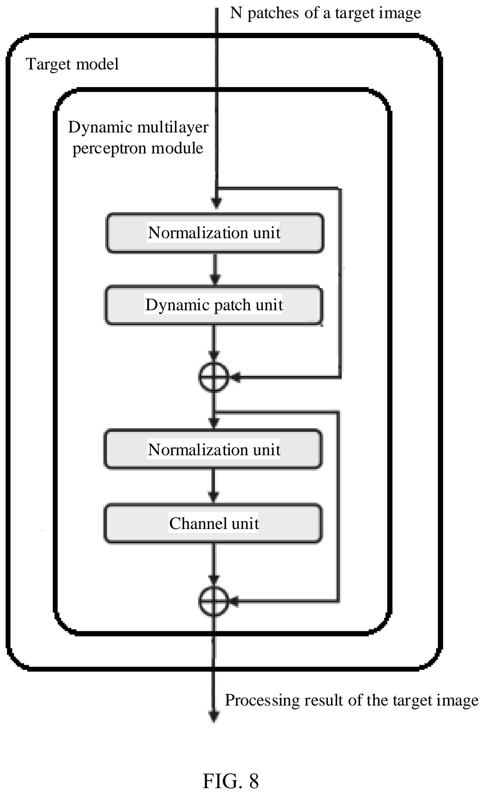

The foregoing describes the target model of the first structure in detail, and the following describes a target model of a second structure. As shown in FIG. 8 (FIG. 8 is a diagram of another structure of a target model according to an embodiment of this application), the target model includes one dynamic multilayer perceptron module, the dynamic multilayer perceptron module includes one dynamic patch unit and one processing unit, and the processing unit includes two normalization units, one channel (channel) unit, and two jump units.

It can be learned that a 1st normalization unit may obtain N patches of a target image, normalize the N patches, to obtain N new patches (the foregoing N normalized patches), and then input the N new patches into the dynamic patch unit for various processing (referring to the embodiment shown in FIG. 5, and details are not described herein), to obtain ninth features of the N new patches. Next, a 1st jump unit may superimpose the ninth features of the new N patches with the N patches, to obtain tenth features of the new N patches. Next, a 2nd normalization unit may normalize the tenth features of the N new patches, to obtain eleventh features of the N new patches. Then, the channel unit may aggregate the eleventh features of the new N patches in a channel dimension, to obtain twelfth features of the new N patches. Finally, a 2nd jump unit may superimpose the twelfth features of the new N patches with the ninth features of the new N patches, to obtain a processing result of the target image.

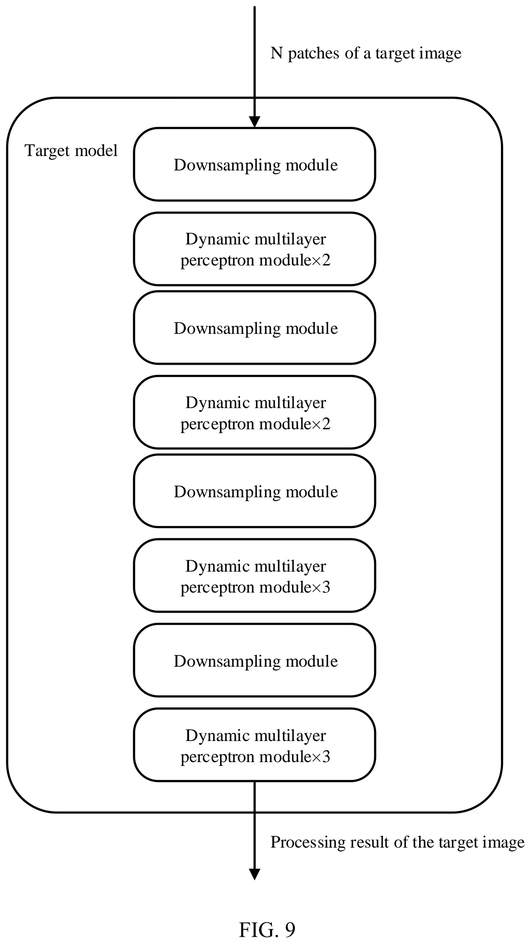

The foregoing describes the target model of the second structure in detail, and the following describes a target model of a third structure. As shown in FIG. 9 (FIG. 9 is a diagram of another structure of a target model according to an embodiment of this application), the target model includes ten dynamic multilayer perceptron modules and four downsampling modules. These modules are connected in series. For an internal structure of each dynamic multilayer perceptron module, refer to a structure of the dynamic multilayer perceptron module shown in FIG. 8.

It should be understood that the target models of the three structures are only used for example descriptions in this embodiment of this application, and do not constitute a limitation on a structure of the target model provided in this embodiment of this application. For example, in the target model shown in FIG. 8, a quantity of normalization units and a quantity of jump units may be increased or reduced. For another example, in the target model shown in FIG. 9, a quantity of dynamic multilayer perceptron modules and a quantity of downsampling modules may be increased or reduced. This is not limited herein. They may be set based on an actual requirement.

In addition, the target model (including DynamicMLP-T, DynamicMLP-S, DynamicMLP-B, and DynamicMLP-L in Table 1) provided in this embodiment of this application may be further compared with models (including models other than DynamicMLP-T, DynamicMLP-S, DynamicMLP-B, and DynamicMLP-L in Table 1) in a part of related technologies. A comparison result is shown in Table 1.

Table 1

| Model | Params. | FLOPs | Throughput (image/s) | Top-1 acc. (%) |
|---|---|---|---|---|
| ResMLP-S12 [39] | 15 M | 3.0 G | 1415 | 76.6 |
| CycleMLP-B1 [4] | 15 M | 2.1 G | 1040 | 78.9 |
| Hire-MLP-T [12] | 18 M | 2.1 G | 1561 | 79.7 |
| ActiveMLP-xT [44] | 15 M | 2.2 G | 1 | 79.7 |
| DynamicMLP-T(ours) | 20 M | 2.2 G | 1278 | 79.8 |
| ViP-Small/7[17] | 25 M | 6.9 G | 719 | 81.5 |
| AS-MLP-T*[21] | 28 M | 4.4 G | 862 | 81.3 |
| CycleMLP-B2 [4] | 27 M | 3.9 G | 635 | 81.6 |
| MorphMLP-T [48] | 23 M | 3.9 G | 1 | 81.6 |
| ActiveMLP-T [44] | 27 M | 4.0 G | - | 82.0 |
| Hire-MLP-S [12] | 33 M | 4.2 G | 807 | 82.1 |
| DynamicMLP-S (ours) | 31 M | 4.4 G | 660 | 82.1 |
| Mixer-B/16 [38] | 59 M | 12.7 G | - | 76.4 |
| S-MLP-dep [46] | 51 M | 10.5 G | 1 | 80.7 |
| ResMLP-S24 [39] | 30 M | 6.0 G | 715 | 79.4 |
| ViP-Medium/7 [17] | 55 M | 163 G | 418 | 82.7 |
| Dynamixer-S [43] | 27 M | 7.3 G | - | 82.7 |
| CycleMLP-B4 [4] | 52 M | 10.1 G | 259 | 83.0 |
| ActiveMLP-S [44] | 39 M | 6.9 G | 1 | 83.0 |
| AS-MLP-S*[21] | 50 M | 8.5 G | 473 | 83.1 |
| MorphMLP-B [48] | 58 M | 102 G | 1 | 83.2 |
| Hire-MLP-B [12] | 58 M | 8.1 G | 437 | 83.2 |
| DynamicMLP-B (ours) | 61 M | 8.0 G | 406 | 83.4 |
| S-MLP-wide [46] | 71 M | 14.0 G | - | 80.0 |
| ResMLP-B24 [39] | 116 M | 23.0 G | 231 | 81.0 |
| ViP-Large/7 [17] | 88 M | 24.4 G | 298 | 83.2 |
| CycleMLP-B5 [4] | 76 M | 123 G | 253 | 83.2 |
| AS-MLP-B* [21] | 88 M | 15.2 G | 308 | 83.3 |
| MorphMLP-L [48] | 76 M | 12.5 G | 1 | 83.4 |
| ActiveMLP-L [44] | 76 M | 123 G | 1 | 83.6 |
| Dynamixer-B [43] | 57M | 17.0 G | - | 83.7 |
| Hire-MLP-L [12] | 96 M | 13.4 G | 290 | 83.8 |
| DynamicMLP-L (ours) | 83 M | 122 G | 287 | 83.8 |

Further, the target model (including DynamicMLP-T, DynamicMLP-S, DynamicMLP-B, and DynamicMLP-L in Table 2) provided in this embodiment of this application may be further compared with models (including models other than DynamicMLP-T, DynamicMLP-S, DynamicMLP-B, and DynamicMLP-L in Table 2) in another part of related technologies.

A comparison result is shown in Table 2.

Table 2

| Model | Family | Params. | FLOPs | Throughput (image/s) | Top-1 acc. (%) |
|---|---|---|---|---|---|
| ResNet18 [5] | CNN | 12 M | 1.8 G | 1 | 69.8 |
| ResNet50 [15] | CNN | 26 M | 4.1 G | 1 | 78.5 |
| ResNet101 [15] | CNN | 45 M | 7.9 G | 1 | 79.8 |
| RegNetY-4G [29] | CNN | 21 M | 4.0 G | 1157 | 80.0 |
| RegNetY-8G [29] | CNN | 39 M | 8.0 G | 592 | 81.7 |
| RegNetY-16G [29] | CNN | 84 M | 16.0 G | 335 | 82.9 |
| GFNet-H-S [32] | FFT | 32 M | 4.5 G | 1 | 81.5 |
| GFNet-H-B [32] | FFT | 54 M | 8.4 G | 1 | 82.9 |
| BoT-S1-50 [35] | Hybrid | 21 M | 4.3 G | 1 | 79.1 |
| BoT-S1-59[35] | Hybrid | 34 M | 7.3 G | - | 81.7 |
| DeiT-S [40] | Trans | 22 M | 4.6 G | 940 | 79.8 |
| DeiT-B [40] | Trans | 86 M | 175 G | 292 | 81.8 |
| PVT-Small [42] | Trans | 25 M | 3.8 G | 820 | 79.8 |
| PVT-Medium [42] | Trans | 44 M | 6.7 G | 526 | 81.2 |
| PVT-Large [42] | Trans | 61 M | 9.8 G | 367 | 81.7 |
| Swin-T [25] | Trans | 29 M | 4.5 G | 755 | 81.3 |
| Swin-S [25] | Trans | 50 M | 8.7 G | 437 | 83.0 |
| Swin-B [25] | Trans | 88 M | 15.4 G | 278 | 83.5 |
| Twins-S [5] | Trans | 24 M | 2.9 G | 1059 | 81.7 |
| Twins-B [5] | Trans | 56 M | 8.6 G | 469 | 83.2 |
| Twins-L [5] | Trans | 99.2 M | 15.1 G | 288 | 83.7 |
| DynamicMLP-T | MLP | 20 M | 2.2 G | 1278 | 79.8 |
| DynamicMLP-S | MLP | 31 M | 4.4 G | 660 | 82.1 |
| DynamicMLP-B | MLP | 61 M | 8.0 G | 406 | 83.4 |
| DynamicMLP-L | MLP | 83 M | 122 G | 287 | 83.8 |

It can be learned from Table 1 and Table 2 that the target model provided in this embodiment of this application has better performance in the visual task, and a computational workload (FLOPs) is less.

In this embodiment of this application, after receiving the N patches of the target image, the target model may first evaluate the N patches, to obtain the evaluation values of the N patches. Next, the target model may select the M patches from the N patches by using the evaluation values of the N patches as the selection criterion. Then, the target model may fuse the M patches, to obtain the fusion result of the M patches. Finally, the target model may perform the series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

Further, the target model provided in this embodiment of this application may independently complete patch screening for the N original patches, and reserve only the M patches in the N original patches for the fusion operation. It can be learned that, such a new model has an automatic patch selection function, and therefore, no additional neural network model needs to be introduced for the model. Therefore, no additional work needs to be performed in a model training phase and a model application phase, and costs and resources can be saved.

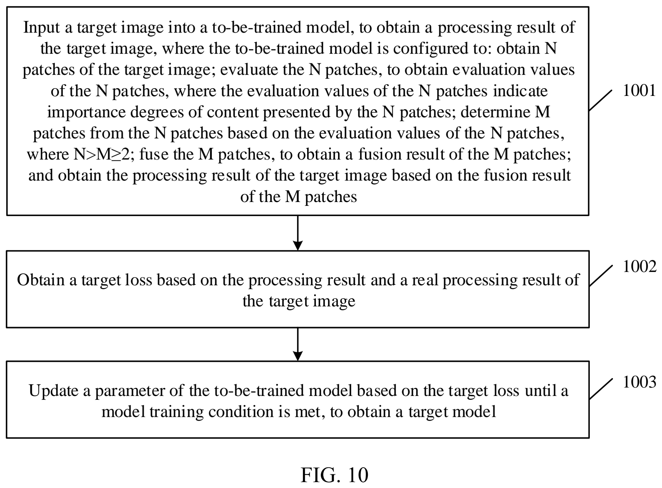

The foregoing describes in detail the image processing method provided in embodiments of this application. The following describes a model training method provided in embodiments of this application. FIG. 10 is a schematic flowchart of a model training method according to an embodiment of this application. As shown in FIG. 10, the method includes the following steps.

1001: Input a target image into a to-be-trained model, to obtain a processing result of the target image, where the to-be-trained model is configured to: obtain N patches of the target image; evaluate the N patches, to obtain evaluation values of the N patches, where the evaluation values of the N patches indicate importance degrees of content presented by the N patches; determine M patches from the N patches based on the evaluation values of the N patches, where $N>M\geq2$; fuse the M patches, to obtain a fusion result of the M patches; and obtain the processing result of the target image based on the fusion result of the M patches.

In this embodiment, when a model having an image processing capability needs to be obtained, the to-be-trained model (namely, a neural network model that is not trained) and a batch of training data may be obtained. The batch of training data includes a real processing result of the target image. The real processing result may also be understood as a label of the target image, and the label is known.

After the target image is obtained, the target image may be divided into the N patches, and the N patches are input to the to-be-trained model, to process the N patches of the target image by using the to-be-trained model, to obtain the processing result of the target image. The to-be-trained model is configured to: obtain the N patches of the target image; evaluate the N patches, to obtain the evaluation values of the N patches, where the evaluation values of the N patches indicate the importance degrees of the content presented by the N patches; determine the M patches from the N patches based on the evaluation values of the N patches, where $N>M\geq2$; fuse the M patches, to obtain the fusion result of the M patches; and obtain the processing result of the target image based on the fusion result of the M patches.

In a possible implementation, the to-be-trained model is configured to: perform a first full connection on the N patches, to obtain first features of the N patches; pool the first features of the N patches, to obtain second features of the N patches; and multiply the first features of the N patches by the second features of the N patches, to obtain third features of the N patches. The third features of the N patches are used as the evaluation values of the N patches.

In a possible implementation, the N patches form a patch array with X rows and Y columns, and the to-be-trained model is configured to: select P patches with largest evaluation values from patches in an $i^{th}$ row, where i=1, ..., X, M=XP, and $P\geq1$; or select K patches with largest evaluation values from patches in a $j^{th}$ column, where j=1, ..., Y, M=YK, and $K\geq1$.

In a possible implementation, the to-be-trained model is further configured to: perform weighted summation on the evaluation values of the N patches and the first features of the N patches, to obtain fourth features of the N patches; and multiply the fourth features of the N patches by evaluation values of the M patches, to obtain fifth features of the M patches; and the to-be-trained model is configured to: concatenate the M patches and the fifth features of the M patches, to obtain sixth features of the M patches; and perform a full connection on the sixth features of the M patches, to obtain seventh features of the M patches. The seventh features of the M patches are used as the fusion result of the M patches.

In a possible implementation, the to-be-trained model is configured to: perform a second full connection on the N patches, to obtain eighth features of the N patches; perform weighted summation on the fusion result of the M patches and eighth features of the M patches, to obtain ninth features of the M patches; perform weighted summation on N-M patches other than the M patches in the N patches and eighth features of the N-M patches, to obtain ninth features of the N-M patches; and process ninth features of the N patches, to obtain the processing result of the target image.

In a possible implementation, the processing includes at least one of the following: normalization, aggregation, or addition.

In a possible implementation, the to-be-trained model is further configured to normalize the N patches, to obtain N normalized patches.

1002: Obtain a target loss based on the processing result and the real processing result of the target image.

After the processing result of the target image is obtained, because the real processing result of the target image is known, the processing result of the target image and the real processing result of the target image may be calculated based on a preset target loss function, to obtain the target loss. The target loss may indicate a difference between the processing result of the target image and the real processing result of the target image.

1003: Update a parameter of the to-be-trained model based on the target loss until a model training condition is met, to obtain a target model.

After the target loss is obtained, the model parameter of the to-be-trained model may be updated based on the target loss, to obtain an updated to-be-trained model, a next batch of training data is obtained, and the updated to-be-trained model is trained based on the next batch of training data (that is, step 1001 to step 1003 are re-performed), until the model training condition is met (for example, the target loss converges), and the target model may be obtained.

The target model obtained through training in this embodiment of this application has an image processing function. Specifically, after receiving the N patches of the target image, the target model may first evaluate the N patches, to obtain the evaluation values of the N patches. Next, the target model may select the M patches from the N patches by using the evaluation values of the N patches as the selection criterion. Then, the target model may fuse the M patches, to obtain the fusion result of the M patches. Finally, the target model may perform the series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

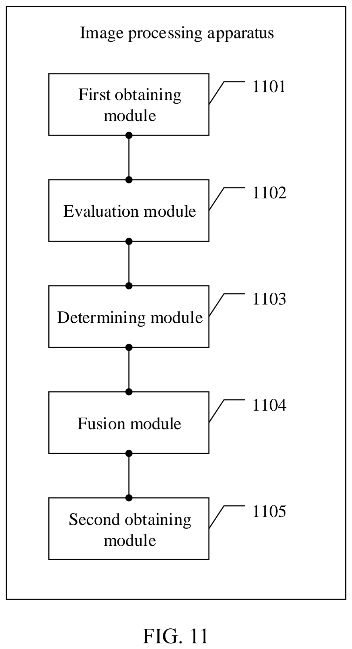

The foregoing specifically describes the image processing method and the model training method provided in embodiments of this application. The following describes an image apparatus and a model training apparatus provided in embodiments of this application. FIG. 11 is a diagram of a structure of an image processing apparatus according to an embodiment of this application. As shown in FIG. 11, the image processing apparatus includes a target model, and the apparatus includes:

a first obtaining module 1101, configured to obtain N patches of a target image;
an evaluation module 1102, configured to evaluate the N patches, to obtain evaluation values of the N patches, where the evaluation values of the N patches indicate importance degrees of content presented by the N patches;
a determining module 1103, configured to determine M patches from the N patches based on the evaluation values of the N patches, where $N>M \geq 2$;
a fusion module 1104, configured to fuse the M patches, to obtain a fusion result of the M patches; and
a second obtaining module 1105, configured to obtain a processing result of the target image based on the fusion result of the M patches.

In this embodiment of this application, after receiving the N patches of the target image, the target model may first evaluate the N patches, to obtain the evaluation values of the N patches. Next, the target model may select the M patches from the N patches by using the evaluation values of the N patches as the selection criterion. Then, the target model may fuse the M patches, to obtain the fusion result of the M patches. Finally, the target model may perform the series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

In a possible implementation, the evaluation module 1102 is configured to: perform a first full connection on the N patches, to obtain first features of the N patches; pool the first features of the N patches, to obtain second features of the N patches; and multiply the first features of the N patches by the second features of the N patches, to obtain third features of the N patches. The third features of the N patches are used as the evaluation values of the N patches.

In a possible implementation, the N patches form a patch array with X rows and Y columns, and the determining module 1103 is configured to: select P patches with largest evaluation values from patches in an $i^{th}$ row, where i=1, ..., X, M=XP, and $P \geq 1$; or select K patches with largest evaluation values from patches in a $j^{th}$ column, where j=1, ..., Y, M=YK, and $K \geq 1$.

In a possible implementation, the apparatus further includes: a summation module, configured to perform weighted summation on the evaluation values of the N patches and the first features of the N patches, to obtain fourth features of the N patches; and a multiplication module, configured to multiply the fourth features of the N patches by evaluation values of the M patches, to obtain fifth features of the M patches; and the fusion module 1104 is configured to: concatenate the M patches and the fifth features of the M patches, to obtain sixth features of the M patches; and perform a full connection on the sixth features of the M patches, to obtain seventh features of the M patches. The seventh features of the M patches are used as the fusion result of the M patches.

In a possible implementation, the second obtaining module 1105 is configured to: perform a second full connection on the N patches, to obtain eighth features of the N patches; perform weighted summation on the fusion result of the M patches and eighth features of the M patches, to obtain ninth features of the M patches; perform weighted summation on N-M patches other than the M patches in the N patches and eighth features of the N-M patches, to obtain ninth features of the N-M patches; and process ninth features of the N patches, to obtain the processing result of the target image.

In a possible implementation, the processing includes at least one of the following: normalization, aggregation, or addition.

In a possible implementation, the apparatus further includes: a normalization module, configured to normalize the N patches, to obtain N normalized patches.

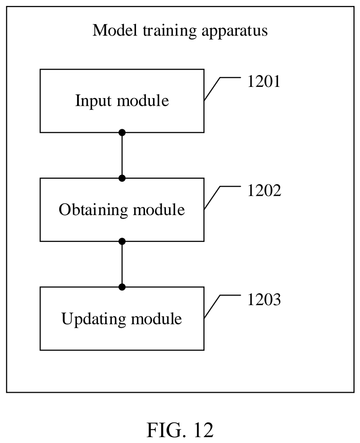

FIG. 12 is a diagram of a structure of a model training apparatus according to an embodiment of this application. As shown in FIG. 12, the apparatus includes:

an input module 1201, configured to input a target image into a to-be-trained model, to obtain a processing result of the target image, where the to-be-trained model is configured to: obtain N patches of the target image; evaluate the N patches, to obtain evaluation values of the N patches, where the evaluation values of the N patches indicate importance degrees of content presented by the N patches; determine M patches from the N patches based on the evaluation values of the N patches, where N>M≥2; fuse the M patches, to obtain a fusion result of the M patches; and obtain the processing result of the target image based on the fusion result of the M patches;

an obtaining module 1202, configured to obtain a target loss based on the processing result and a real processing result of the target image; and

an updating module 1203, configured to update a parameter of the to-be-trained model based on the target loss until a model training condition is met, to obtain a target model.

The target model obtained through training in this embodiment of this application has an image processing function. Specifically, after receiving the N patches of the target image, the target model may first evaluate the N patches, to obtain the evaluation values of the N patches. Next, the target model may select the M patches from the N patches by using the evaluation values of the N patches as the selection criterion. Then, the target model may fuse the M patches, to obtain the fusion result of the M patches. Finally, the target model may perform the series of processing on the fusion result of the M patches, to obtain the processing result of the target image. In the foregoing process, because the evaluation values of the N patches indicate the importance degrees of the content presented by the N patches, the M patches selected by the target model based on the evaluation values are usually an important part of the content of the target image. Therefore, in a process of obtaining the processing result of the target image, the target model performs the fusion operation only on the M patches, and does not perform the fusion operation on the remaining N-M patches, to effectively reduce a computational workload, thereby shortening total duration of image processing, and improving image processing efficiency.

In a possible implementation, the to-be-trained model is configured to: perform a first full connection on the N patches, to obtain first features of the N patches; pool the first features of the N patches, to obtain second features of the N patches; and multiply the first features of the N patches by the second features of the N patches, to obtain third features of the N patches. The third features of the N patches are used as the evaluation values of the N patches.

In a possible implementation, the N patches form a patch array with X rows and Y columns, and the to-be-trained model is configured to: select P patches with largest evaluation values from patches in an $i^{th}$ row, where i=1, ..., X, M=XP, and P≥1; or select K patches with largest evaluation values from patches in a $j^{th}$ column, where j=1, ..., Y, M=YK, and K≥1.

In a possible implementation, the to-be-trained model is further configured to: perform weighted summation on the evaluation values of the N patches and the first features of the N patches, to obtain fourth features of the N patches; and multiply the fourth features of the N patches by evaluation values of the M patches, to obtain fifth features of the M patches; and the to-be-trained model is configured to: concatenate the M patches and the fifth features of the M patches, to obtain sixth features of the M patches; and perform a full connection on the sixth features of the M patches, to obtain seventh features of the M patches. The seventh features of the M patches are used as the fusion result of the M patches.

In a possible implementation, the to-be-trained model is configured to: perform a second full connection on the N patches, to obtain eighth features of the N patches; perform weighted summation on the fusion result of the M patches and eighth features of the M patches, to obtain ninth features of the M patches; perform weighted summation on N-M patches other than the M patches in the N patches and eighth features of the N-M patches, to obtain ninth features of the N-M patches; and process ninth features of the N patches, to obtain the processing result of the target image.

In a possible implementation, the processing includes at least one of the following: normalization, aggregation, or addition.

In a possible implementation, the to-be-trained model is further configured to normalize the N patches, to obtain N normalized patches.

It should be noted that, content such as information exchange between the modules/units of the apparatuses and an execution process is based on the same concept as the method embodiments of this application, and produces the same technical effect as that of the method embodiments of this application. For specific content, refer to the foregoing descriptions in the method embodiments of this application. Details are not described herein again.

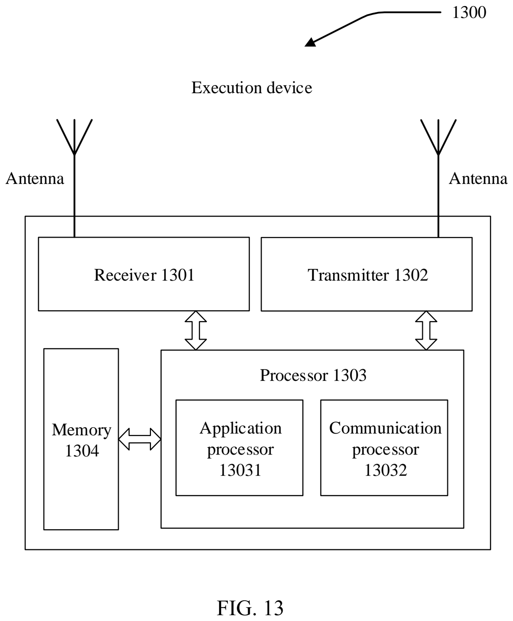

An embodiment of this application further relates to an execution device. FIG. 13 is a diagram of a structure of an execution device according to an embodiment of this application. As shown in FIG. 13, an execution device 1300 may be specifically represented as a mobile phone, a tablet computer, a notebook computer, an intelligent wearable device, a server, or the like. This is not limited herein. The image processing apparatus described in the embodiment corresponding to FIG. 11 may be deployed on the execution device 1300, and is configured to implement an image processing function in the embodiment corresponding to FIG. 5. Specifically, the execution device 1300 includes a receiver 1301, a transmitter 1302, a processor 1303, and a memory 1304 (there may be one or more processors 1303 in the execution device 1300, and one processor is used as an example in FIG. 13). The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data to the processor 1303. A part of the memory 1304 may further include a non-volatile random access memory (non-volatile random access memory, NVRAM). The memory 1304 stores a processor and operation instructions, an executable module or a data structure, a subset thereof, or an extended set thereof. The operation instructions may include various operation instructions for implementing various operations.

The processor 1303 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiments of this application may be applied to the processor 1303, or may be implemented by the processor 1303. The processor 1303 may be an integrated circuit chip and has a signal processing capability. In an implementation process, steps in the foregoing methods can be implemented by using a hardware integrated logic circuit in the processor 1303, or by using instructions in a form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware assembly. The processor 1303 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information in the memory 1304 and completes the steps in the foregoing methods in combination with hardware of the processor.

The receiver 1301 may be configured to: receive input digital or character information, and generate signal input related to a setting related to and function control of the execution device. The transmitter 1302 may be configured to output digital or character information through a first interface. The transmitter 1302 may be further configured to send instructions to a disk group through the first interface, to modify data in the disk group. The transmitter 1302 may further include a display device such as a display.

In this embodiment of this application, in one case, the processor 1303 is configured to obtain the processing result of the target image by using the target model in the embodiment corresponding to FIG. 5.

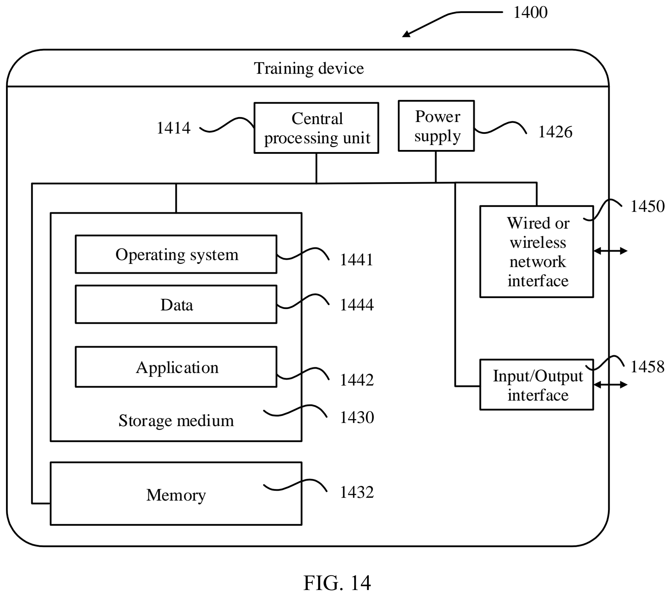

An embodiment of this application further relates to a training device. FIG. 14 is a diagram of a structure of a training device according to an embodiment of this application. As shown in FIG. 14, a training device 1400 is implemented by one or more servers. The training device 1400 may greatly differ due to different configurations or performance, and may include one or more central processing units (central processing units, CPUs) 1414 (for example, one or more processors), a memory 1432, one or more storage media 1430 (for example, one or more mass storage devices) that store an application 1442 or data 1444. The memory 1432 and the storage medium 1430 may be transient storage or persistent storage. A program stored in the storage medium 1430 may include one or more modules (not shown in the figure), and each module may include a series of instruction operations performed on the training device. Further, the central processing unit 1414 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, and/or one or more operating systems 1441, for example, Windows ServerTM, Mac OS XTM, UnixTM, LinuxTM, and FreeBSDTM.

Specifically, the training device may perform the model training method in the embodiment corresponding to FIG. 10.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

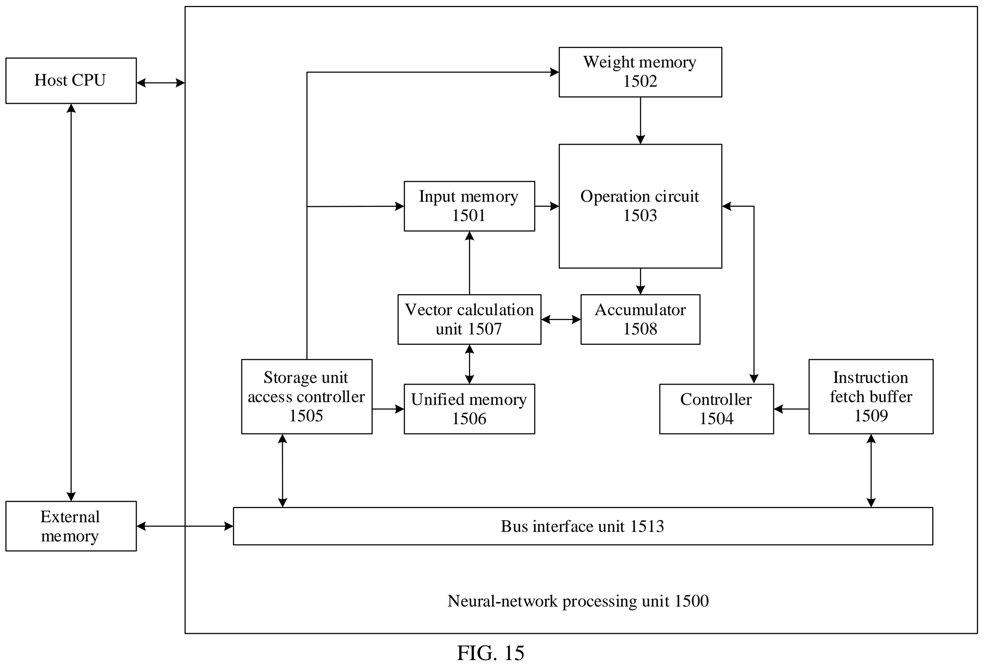

Specifically, FIG. 15 is a diagram of a structure of a chip according to an embodiment of this application. The chip may be represented as a neural-network processing unit NPU 1500. The NPU 1500 is mounted on a host CPU (Host CPU) as a coprocessor, and the host CPU assigns a task. A core part of the NPU is an operation circuit 1503. A controller 1504 controls the operation circuit 1503 to extract matrix data in a memory and performs a multiplication operation.

In some implementations, the operation circuit 1503 internally includes a plurality of processing units (Process Engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches data corresponding to the matrix B from a weight memory 1502, and caches the data on each PE in the operation circuit. The operation circuit fetches data of the matrix A from an input memory 1501, performs a matrix operation with the matrix B, to obtain a partial result or a final result of a matrix, and stores the result in an accumulator (accumulator) 1508.

A unified memory 1506 is configured to store input data and output data. Weight data is directly transferred to the weight memory 1502 through a storage unit access controller (Direct Memory Access Controller, DMAC) 1505. The input data is also transferred to the unified memory 1506 through the DMAC.

A BIU is a bus interface unit, namely, a bus interface unit 1513, and is configured to perform interaction between an AXI bus, and the DMAC and an instruction fetch buffer (Instruction Fetch Buffer, IFB) 1509.

The bus interface unit (Bus Interface Unit, BIU for short) 1513 is used by the instruction fetch buffer 1509 to obtain instructions from an external memory, and is further used by the storage unit access controller 1505 to obtain original data of the input matrix A or the weight matrix B from the external memory.

The DMAC is mainly configured to: transfer input data in the external memory DDR to the unified memory 1506, transfer weight data to the weight memory 1502, or transfer input data to the input memory 1501.

A vector calculation unit 1507 includes a plurality of operation processing units, and when necessary, performs further processing on an output of the operation circuit 1503, for example, vector multiplication, vector addition, exponential operation, logarithm operation, and size comparison. The vector calculation unit 1507 is mainly configured to perform network computation at a non-convolutional/fully-connected layer of a neural network, for example, batch normalization (batch normalization), pixel-level summation, and upsampling of a predicted label plane.

In some implementations, the vector calculation unit 1507 can store a processed output vector in the unified memory 1506. For example, the vector calculation unit 1507 may apply a linear function or a nonlinear function to the output of the operation circuit 1503, for example, perform linear interpolation on a predicted label plane extracted from a convolutional layer, and for another example, obtain a vector of an accumulated value to generate an activation value. In some implementations, the vector calculation unit 1507 generates a normalized value, a pixel-level sum value, or both. In some implementations, the processed output vector can be used as an activate input to the operation circuit 1503, for example, the processed output vector can be used at a subsequent layer of the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located at one location, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. An image processing method, wherein the method is implemented by using a target model, and the method comprises:

   obtaining N patches of a target image;
   evaluating the N patches, to obtain evaluation values of the N patches, wherein the evaluation values of the N patches indicate importance degrees of content presented by the N patches;
   determining M patches from the N patches based on the evaluation values of the N patches, wherein $N>M\geq2$;
   fusing the M patches, to obtain a fusion result of the M patches; and
   obtaining a processing result of the target image based on the fusion result of the M patches.

2. The method according to claim 1, wherein evaluating the N patches, to obtain the evaluation values of the N patches comprises:

   performing a first full connection on the N patches, to obtain first features of the N patches;
   pooling the first features of the N patches, to obtain second features of the N patches; and
   multiplying the first features of the N patches by the second features of the N patches, to obtain third features of the N patches, wherein the third features of the N patches are used as the evaluation values of the N patches.

3. The method according to claim 1 or 2, wherein the N patches form a patch array with X rows and Y columns, and determining the M patches from the N patches based on the evaluation values comprises:

   selecting P patches with largest evaluation values from patches in an $i^{th}$ row, wherein $i=1, ..., X$, $M=XP$, and $P\geq1$; or
   selecting K patches with largest evaluation values from patches in a $j^{th}$ column, wherein $j=1, ..., Y$, $M=YK$, and $K\geq1$.

4. The method according to any one of claims 1 to 3, wherein the method further comprises:

performing weighted summation on the evaluation values of the N patches and the first features of the N patches, to obtain fourth features of the N patches; and

multiplying the fourth features of the N patches by evaluation values of the M patches, to obtain fifth features of the M patches; and

fusing the M patches, to obtain the fusion result of the M patches comprises:

concatenating the M patches and the fifth features of the M patches, to obtain sixth features of the M patches; and

performing a full connection on the sixth features of the M patches, to obtain seventh features of the M patches, wherein the seventh features of the M patches are used as the fusion result of the M patches.

5. The method according to any one of claims 1 to 4, wherein obtaining the processing result of the target image based on the fusion result of the M patches comprises:

performing a second full connection on the N patches, to obtain eighth features of the N patches;

performing weighted summation on the fusion result of the M patches and eighth features of the M patches, to obtain ninth features of the M patches;

performing weighted summation on N-M patches other than the M patches in the N patches and eighth features of the N-M patches, to obtain ninth features of the N-M patches; and

processing ninth features of the N patches, to obtain the processing result of the target image.

6. The method according to claim 5, wherein the processing comprises at least one of the following: normalization, aggregation, or addition.

7. The method according to any one of claims 1 to 6, wherein before evaluating the N patches, to obtain the evaluation values of the N patches, the method further comprises:
normalizing the N patches, to obtain N normalized patches.

8. A model training method, wherein the method comprises:

inputting a target image into a to-be-trained model, to obtain a processing result of the target image, wherein the to-be-trained model is configured to: obtain N patches of the target image; evaluate the N patches, to obtain evaluation values of the N patches, wherein the evaluation values of the N patches indicate importance degrees of content presented by the N patches; determine M patches from the N patches based on the evaluation values of the N patches, wherein N>M≥2; fuse the M patches, to obtain a fusion result of the M patches; and obtain the processing result of the target image based on the fusion result of the M patches;

obtaining a target loss based on the processing result and a real processing result of the target image; and

updating a parameter of the to-be-trained model based on the target loss until a model training condition is met, to obtain a target model.

9. The method according to claim 8, wherein the to-be-trained model is configured to:

perform a first full connection on the N patches, to obtain first features of the N patches;

pool the first features of the N patches, to obtain second features of the N patches; and

multiply the first features of the N patches by the second features of the N patches, to obtain third features of the N patches, wherein the third features of the N patches are used as the evaluation values of the N patches.

10. The method according to claim 8 or 9, wherein the N patches form a patch array with X rows and Y columns, and the to-be-trained model is configured to:

select P patches with largest evaluation values from patches in an $i^{th}$ row, wherein i=1, ..., X, M=XP, and P≥1; or

select K patches with largest evaluation values from patches in a $j^{th}$ column, wherein j=1, ..., Y, M=YK, and K≥1.

11. The method according to any one of claims 8 to 10, wherein the to-be-trained model is further configured to:

perform weighted summation on the evaluation values of the N patches and the first features of the N patches, to obtain fourth features of the N patches; and

multiply the fourth features of the N patches by evaluation values of the M patches, to obtain fifth features of the M patches; and

the to-be-trained model is configured to:

concatenate the M patches and the fifth features of the M patches, to obtain sixth features of the M patches; and

perform a full connection on the sixth features of the M patches, to obtain seventh features of the M patches, wherein the seventh features of the M patches are used as the fusion result of the M patches.

12. The method according to any one of claims 8 to 11, wherein the to-be-trained model is configured to:

perform a second full connection on the N patches, to obtain eighth features of the N patches;

perform weighted summation on the fusion result of the M patches and eighth features of the M patches, to obtain ninth features of the M patches;

perform weighted summation on N-M patches other than the M patches in the N patches and eighth features of the N-M patches, to obtain ninth features of the N-M patches; and

process ninth features of the N patches, to obtain the processing result of the target image.

13. The method according to claim 12, wherein the processing comprises at least one of the following: normalization, aggregation, or addition.

14. The method according to any one of claims 8 to 13, wherein the to-be-trained model is further configured to: normalize the N patches, to obtain N normalized patches.

15. An image processing apparatus, wherein the apparatus comprises a target model, and the apparatus comprises:

a first obtaining module, configured to obtain N patches of a target image;

an evaluation module, configured to evaluate the N patches, to obtain evaluation values of the N patches, wherein the evaluation values of the N patches indicate importance degrees of content presented by the N patches;

a determining module, configured to determine M patches from the N patches based on the evaluation values of the N patches, wherein N>M≥2;

a fusion module, configured to fuse the M patches, to obtain a fusion result of the M patches; and

a second obtaining module, configured to obtain a processing result of the target image based on the fusion result of the M patches.

16. A model training apparatus, wherein the apparatus comprises:

an input module, configured to input a target image into a to-be-trained model, to obtain a processing result of the target image, wherein the to-be-trained model is configured to: obtain N patches of the target image; evaluate the N patches, to obtain evaluation values of the N patches, wherein the evaluation values of the N patches indicate importance degrees of content presented by the N patches; determine M patches from the N patches based on the evaluation values of the N patches, wherein N>M≥2; fuse the M patches, to obtain a fusion result of the M patches; and obtain the processing result of the target image based on the fusion result of the M patches;

an obtaining module, configured to obtain a target loss based on the processing result and a real processing result of the target image; and

an updating module, configured to update a parameter of the to-be-trained model based on the target loss until a model training condition is met, to obtain a target model.

17. An image processing apparatus, wherein the apparatus comprises a memory and a processor, the memory stores code, the processor is configured to execute the code, and when the code is executed, the image processing apparatus performs the method according to any one of claims 1 to 14.

18. A computer storage medium, wherein the computer storage medium stores one or more instructions, and when the instructions are executed by one or more computers, the one or more computers are enabled to perform the method according to any one of claims 1 to 14.

19. A computer program product, wherein the computer program product stores instructions, and when the instructions are executed by a computer, the computer is enabled to perform the method according to any one of claims 1 to 14.

Intelligent information chain

Intelligent product and industry application

| Translation/Text analysis/... | Speech/Vision/Image/... |

Data

Data processing: | Data training/Machine learning/ Deep learning | Search/Inference/ Decision making | ... |

Infrastructure | Sensor | Intelligent chip | Basic platform | ... |

IT value chain

FIG. 1

FIG. 2a

EP 4 657 389 A1

| User | Intelligent terminal |
|---|---|

Interaction interface

| Target image | Processing result of the target image |

Memory

Processor: | Data training/Machine learning/Deep learning | Search/Inference/Decision-making | ... |

Intelligent terminal

FIG. 2b

300

Data storage
system 250

Execution device 210

...

Communication network

Local device
301

Local device
302

Examples

FIG. 2c

100

Data collection device 160

Training sample

Database 130

Training device 120

Main region | Object category

Execution device 110

User behavior

I/O interface 112

CNN feature extraction model

Data storage system 150

Client device 140

Object category

Calculation module 111

FIG. 3

N patches of a target image

Target model

Dynamic multilayer
perceptron module

Dynamic patch unit

Processing unit

Processing result of
the target image

FIG. 4

```
┌─────────────────────────────────────────────────────────────┐
│                                                               │    501
│          Obtain N patches of a target image                   │ ╱
│                                                               │
└─────────────────────────────────────────────────────────────┘
                              │
                              ▼
┌─────────────────────────────────────────────────────────────┐
│  Evaluate the N patches, to obtain evaluation values of the   │    502
│  N patches, where the evaluation values of the N patches      │ ╱
│  indicate importance degrees of content presented by the      │
│  N patches                                                    │
└─────────────────────────────────────────────────────────────┘
                              │
                              ▼
┌─────────────────────────────────────────────────────────────┐
│  Determine M patches from the N patches based on the          │    503
│  evaluation values of the N patches, where N>M≥2              │ ╱
│                                                               │
└─────────────────────────────────────────────────────────────┘
                              │
                              ▼
┌─────────────────────────────────────────────────────────────┐
│                                                               │    504
│     Fuse the M patches, to obtain a fusion result of the      │ ╱
│                      M patches                                │
└─────────────────────────────────────────────────────────────┘
                              │
                              ▼
┌─────────────────────────────────────────────────────────────┐
│  Obtain a processing result of the target image based on      │    505
│  the fusion result of the M patches                           │ ╱
│                                                               │
└─────────────────────────────────────────────────────────────┘
```

FIG. 5

FIG. 6

Dynamic-Token

Target image

Set of patches selected in a horizontal direction

Horizontal predictor

Horizontal global feature map

Horizontal mixer

Horizontal fused feature map

1st new feature map

Vertical global feature map

Vertical predictor

Set of patches selected in a vertical direction

Vertical mixer

Vertical fused feature map

2nd new feature map

Target image

FC

3rd new feature map

FIG. 7

N patches of a target image

Target model

Dynamic multilayer
perceptron module

Normalization unit

Dynamic patch unit

⊕

Normalization unit

Channel unit

⊕

Processing result of the target image

FIG. 8

N patches of a target image

Target model

Downsampling module

Dynamic multilayer
perceptron module×2

Downsampling module

Dynamic multilayer
perceptron module×2

Downsampling module

Dynamic multilayer
perceptron module×3

Downsampling module

Dynamic multilayer
perceptron module×3

Processing result of the target image

FIG. 9

Input a target image into a to-be-trained model, to obtain a processing result of the target image, where the to-be-trained model is configured to: obtain N patches of the target image; evaluate the N patches, to obtain evaluation values of the N patches, where the evaluation values of the N patches indicate importance degrees of content presented by the N patches; determine M patches from the N patches based on the evaluation values of the N patches, where N>M≥2; fuse the M patches, to obtain a fusion result of the M patches; and obtain the processing result of the target image based on the fusion result of the M patches

1001

Obtain a target loss based on the processing result and a real processing result of the target image

1002

Update a parameter of the to-be-trained model based on the target loss until a model training condition is met, to obtain a target model

1003

FIG. 10

Image processing apparatus

First obtaining module — 1101

Evaluation module — 1102

Determining module — 1103

Fusion module — 1104

Second obtaining module — 1105

FIG. 11

FIG. 12

1300

Execution device

| Antenna | | Antenna |

| Receiver 1301 | Transmitter 1302 |

Processor 1303

| Memory 1304 | Application processor 13031 | Communication processor 13032 |

FIG. 13

1400

Training device

1414 — Central processing unit

Power supply — 1426

Operating system — 1441

Data — 1444

Application — 1442

Storage medium — 1430

Memory — 1432

Wired or wireless network interface — 1450

Input/Output interface — 1458

FIG. 14

FIG. 15

## INTERNATIONAL SEARCH REPORT

| International application No. |
|---|
| **PCT/CN2024/077856** |

| **A.** | **CLASSIFICATION OF SUBJECT MATTER** |
|---|---|

G06V 10/80(2022.01)i; G06N 3/0464(2023.01)i; G06V 10/50(2022.01)i; G06V 10/82(2022.01)i; G06V 10/776(2022.01)i; G06N 3/048(2023.01)i; G06N 3/084(2023.01)i

According to International Patent Classification (IPC) or to both national classification and IPC

| **B.** | **FIELDS SEARCHED** |
|---|---|

Minimum documentation searched (classification system followed by classification symbols)

IPC:G06V10/-; G06N3/-;

Documentation searched other than minimum documentation to the extent that such documents are included in the fields searched

Electronic data base consulted during the international search (name of data base and, where practicable, search terms used)

CNABS, CNTXT, BAIDU, CNKI, VEN, DWPI, USTXT, WOTXT, IEEE: 图像, 图像块, 评估, 体现, 表达, 重要度, 融合, 全连接, 特征, 池化, 加权, 乘, 拼接, 训练, 模型, image, image block+, assessment, express+, importance, fully connect+, feature, pooling, weight+, multiply, montage, train+, model

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 116310677 A (HUAWEI TECHNOLOGIES CO., LTD.) 23 June 2023 (2023-06-23)<br>claims 1-19 | 1-19 |
| X | CN 114693977 A (BEIJING BAIDU NETCOM SCIENCE AND TECHNOLOGY CO., LTD.) 01 July 2022 (2022-07-01)<br>description, paragraphs 4-8 and 50-60 | 1-3, 7-10, 14-19 |
| A | CN 113989566 A (BEIJING SENSETIME SCIENCE TECHNOLOGY DEVELOPMENT CO., LTD.) 28 January 2022 (2022-01-28)<br>entire document | 1-19 |
| A | CN 109272499 A (XIDIAN UNIVERSITY) 25 January 2019 (2019-01-25)<br>entire document | 1-19 |
| A | CN 112348809 A (TIANJIN UNIVERSITY) 09 February 2021 (2021-02-09)<br>entire document | 1-19 |
| A | CN 114119378 A (HUAWEI TECHNOLOGIES CO., LTD.) 01 March 2022 (2022-03-01)<br>entire document | 1-19 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 April 2024** | **24 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/077856** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022027987 A1 (NEXWISE INTELLIGENCE CHINA LTD.) 10 February 2022 (2022-02-10)<br>entire document | 1-19 |

Form PCT/ISA/210 (second sheet) (July 2022)

47

## INTERNATIONAL SEARCH REPORT
### Information on patent family members

International application No.

**PCT/CN2024/077856**

| Patent document cited in search report | | | Publication date (day/month/year) | Patent family member(s) | | | Publication date (day/month/year) |
|---|---|---|---|---|---|---|---|
| CN | 116310677 | A | 23 June 2023 | None | | | |
| CN | 114693977 | A | 01 July 2022 | None | | | |
| CN | 113989566 | A | 28 January 2022 | None | | | |
| CN | 109272499 | A | 25 January 2019 | CN | 109272499 | B | 09 October 2020 |
| CN | 112348809 | A | 09 February 2021 | CN | 112348809 | B | 23 May 2023 |
| CN | 114119378 | A | 01 March 2022 | WO | 2022042049 | A1 | 03 March 2022 |
| | | | | EP | 4198875 | A1 | 21 June 2023 |
| | | | | US | 2023214976 | A1 | 06 July 2023 |
| | | | | EP | 4198875 | A4 | 21 February 2024 |
| WO | 2022027987 | A1 | 10 February 2022 | CN | 112016591 | A | 01 December 2020 |

Form PCT/ISA/210 (patent family annex) (July 2022)

**EP 4 657 389 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310185947